(19) Europäisches Patentamt
European Patent Office
Office européen des brevets

(11) **EP 2 615 487 A2**

(12) **EUROPÄISCHE PATENTANMELDUNG**

(43) Veröffentlichungstag:
**17.07.2013  Patentblatt 2013/29**

(51) Int Cl.:
**G02B 27/64** $^{(2006.01)}$

(21) Anmeldenummer: **13150697.4**

(22) Anmeldetag: **09.01.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **13.01.2012  DE 102012000862
13.01.2012  US 201261586344 P**

(71) Anmelder: **Carl Zeiss Sports Optics GmbH
35576 Wetzlar (DE)**

(72) Erfinder:
• **Weigand, Holger
50679 Köln-Deutz (DE)**
• **Jester, Philipp
89075 Ulm (DE)**
• **Jahn, Dirk
99099 Erfurt (DE)**

(74) Vertreter: **Witte, Weller & Partner
Postfach 10 54 62
70047 Stuttgart (DE)**

(54) **Fernoptisches Gerät mit Bildstabilisierung und verbesserter Schwenkdetektion**

(57)    Die vorliegende Erfindung betrifft ein Fernoptisches Gerät (10) mit mindestens einem Tubus (11, 12), in dem ein optisches System (14) angeordnet ist, mit mindestens einer Bildstabilisierungseinrichtung (33, 36, 39), die dazu ausgebildet ist, mindestens eine optische Baugruppe (16, 17, 18) des optischen Systems (14) relativ zu dem mindestens einen Tubus (11, 12) zu bewegen, mit mindestens einer Signalverarbeitungseinheit (42), die derart ausgebildet ist, dass sie die mindestens eine Bildstabilisierungseinrichtung (33, 36, 39) in einem Modus aus einer Mehrzahl von Modi (84, 86) ansteuert, wobei jedem Modus eine jeweilige Bewegungssituation des fernoptischen Geräts (10) zugeordnet ist, und mit einer Modusdetektionseinheit (54), die derart ausgebildet ist, dass die den Modus aus der Mehrzahl von Modi (84, 86) bestimmt. Des Weiteren ist die Modusdetektionseinheit (54) derart ausgebildet ist, dass sie den Modus bestimmt, indem sie mindestens einen Vergleichswert aus einem jeweiligen Ortsableitungswert einer aus einer ersten Bewegung und einer zweiten Bewegung des fernoptischen Geräts (10) gebildeten Trajektorie ermittelt und den mindestens einen Vergleichswert mit einem jeweiligen Grenzwert vergleicht.

Fig. 3

EP 2 615 487 A2

**Beschreibung**

Die vorliegende Erfindung betrifft ein fernoptisches Gerät mit mindestens einem Tubus, in dem ein optisches System angeordnet ist, mit mindestens einer Bildstabilisierungseinrichtung, die dazu ausgebildet ist, mindestens eine optische Baugruppe des optischen Systems relativ zu dem mindestens einen Tubus zu bewegen, mit mindestens einer Signalverarbeitungseinheit, die derart ausgebildet ist, dass sie mindestens eine Bildstabilisierungseinrichtung in einem Modus aus einer Mehrzahl von Modi ansteuert, wobei jedem Modus eine jeweilige Bewegungssituation des fernoptischen Geräts zugeordnet ist, und mit einer Modusdetektionseinheit, die derart ausgebildet ist, dass sie den Modus aus der Mehrzahl von Modi bestimmt.

Des Weiteren betrifft die vorliegende Erfindung ein Verfahren zum Bestimmen eines Modus für eine Ansteuerung einer Bildstabilisierungseinrichtung in einem fernoptischen Gerät, wobei die Bildstabilisierungseinrichtung in einem Modus aus einer Mehrzahl von Modi angesteuert wird, wobei jedem Modus eine jeweilige Bewegungssituation des fernoptischen Geräts zugeordnet ist.

Ein derartiges fernoptisches Gerät und ein derartiges Verfahren sind beispielsweise aus der Druckschrift DE 199 37 775 A1 bekannt.

Bei den fernoptischen Geräten im Rahmen der vorliegenden Erfindung kann es sich insbesondere um monokulare oder binokulare Fernrohre handeln. Wenn im Folgenden daher von einem monokularen oder binokularen Fernrohr gesprochen wird, ist dieses jedoch keinesfalls einschränkend hinsichtlich der Art des fernoptischen Geräts zu verstehen. Grundsätzlich kann es sich auch um andere fernoptische Geräte als modulare oder binokulare Fernrohre handeln, beispielsweise um eine Kamera.

Fernoptische Geräte weisen häufig eine Bildstabilisierung auf, um Zitterdrehbewegungen des fernoptischen Geräts zu kompensieren. Die Zitterbewegungen können dabei von einem Nutzer des fernoptischen Geräts herrühren, der das fernoptische Gerät vor seine Augen hält, sie können aber auch von einem bestimmten Untergrund verursacht sein, beispielsweise wenn der Nutzer sich auf einem Schiff befindet. Die Zitterbewegungen erfolgen dabei zumeist in erster Linie um eine Hochachse und eine Querachse des fernoptischen Geräts. Unter diesen Zitterdrehbewegungen leidet eine sichtbare Bildauflösung und macht kleine Bilddetails nicht erkennbar. Zudem wird das verwackelte Bild von einem Nutzer häufig als störend empfunden.

Im Stand der Technik sind daher verschiedene Vorschläge für Arten der Bildstabilisierung gemacht worden. Beispielsweise sind rein mechanische Bildstabilisierungen bekannt. Diese können rein passiv wirken, etwa nach Art einer Wirbelstrombremse. Es sind jedoch auch aktive Systeme bekannt, die mittels Aktuatoren auf eine Bildstabilisierungseinrichtung einwirken.

Insbesondere kann eine Einbettung der Aktuatoren eines aktiven mechanischen Bildstabilisierungssystems in einen Regelungskreis erfolgen, wobei die Aktuatoren von einer zentralen Signalverarbeitungseinheit des fernoptischen Geräts angesteuert werden. Auch die Art der optischen Elemente, auf die mittels der Bildstabilisierungseinrichtung eingewirkt wird, um die Bildstabilisierung herbeizuführen, kann verschieden sein. Im Stand der Technik wurden verschiedene Lösungsmöglichkeiten hierfür vorgeschlagen, etwa das Umkehrsystem, das ein Linsenumkehrsystem oder ein Prismenumkehrsystem sein kann, relativ zu einem Tubus bzw. Gehäuseelement des fernoptischen Geräts um eine oder mehrere Achsen zu verdrehen, oder das Objektiv oder ein Teil des Objektivs senkrecht zu einer optischen Achse des fernoptischen Geräts zu bewegen. Auch rein softwarebasierte Implementierungen einer Bildstabilisierung sind möglich, insbesondere im Zusammenwirken mit einer digitalen Bildaufnahme. Außer bei rein passiv arbeitenden mechanischen Systemen ist eine Verwendung der vorliegenden Erfindung grundsätzlich zusammen mit allen anderen Arten einer Bildstabilisierung denkbar.

Bei einer Bildstabilisierung ist es gewünscht, dass nur dann eine Kompensation der Bewegungen des fernoptischen Geräts aufgrund äußerer Einflüsse erfolgt, wenn die Bewegungen unabsichtlich sind. Diese unabsichtlichen Bewegungen werden im Rahmen dieser Anmeldung als Zitterbewegungen bzw. Zitterdrehbewegungen bezeichnet. Hiervon zu unterscheiden sind jedoch absichtliche Bewegungen, beispielsweise wenn ein Nutzer das fernoptische Gerät verschwenkt, um ein anderes Objekt zu betrachten, oder wenn der Nutzer während einer Betrachtung einem sich bewegenden Objekt folgt. Naturgemäß soll bei diesen absichtlichen Bewegungen keine Kompensation der Bewegung erfolgen. Ansonsten würde es zunächst zu dem für den Nutzer irritierenden Verhalten des fernoptischen Geräts kommen, dass das Bild stehen bleibt, obwohl er das fernoptische Gerät verschwenkt. Des Weiteren würde eine Bildstabilisierungseinrichtung ab eines gewissen Bewegungsumfangs eine maximal mögliche Kompensation bzw. Auslenkung erreichen und dort anschlagen.

Daher ist in den fernoptischen Geräten in der Regel eine im Folgenden Modusdetektionseinheit genannte Einrichtung vorgesehen, die hardware- als auch softwareimplementiert sein kann. Die Modusdetektionseinheit kann separat, aber auch beispielsweise als Teil der zentralen Signalverarbeitungseinheit vorgesehen sein und dient dazu, zwischen ungewollten Zitterdrehbewegungen und absichtlichen Schwenk- oder Kippbewegungen zu unterscheiden. Es wird daher zwischen verschiedenen Bewegungssituationen unterschieden, denen jeweils ein entsprechender Modus der Bildstabilisierung zugeordnet ist, und der dem Charakter der Bewegungssituation, d.h. ob diese ungewollt oder gewollt ist, Rechnung trägt. Für die Unterscheidung zwischen verschiedenen Bewegungssituationen bzw. der damit einhergehenden Festsetzung eines Modus der Bildstabilisierung wurden bereits verschiedene Vorschläge gemacht.

So zeigt beispielsweise die eingangs genannte Druckschrift DE 199 37 775 A1 einen Pegeldetektor, der ein aktuelles Winkelgeschwindigkeitssignal erfasst und anhand eines Schwellwertvergleichs einen Einfluss auf die Art der Ansteuerung einer Bildstabilisierungseinrichtung nimmt, etwa indem ein Hochpassfilter und eine Integratoreinheit des Winkelgeschwindigkeitssignals überbrückt werden.

Die Druckschrift US 6 384 976 B1 zeigt ebenfalls die Bestimmung des Modus der Bildstabilisierung anhand eines Vergleichs eines Winkelgeschwindigkeitssignals mit einem festen Schwellwert. Wird ein Schwellwert überschritten, findet ein Umschalten in einen anderen Modus statt. Wird derselbe Schwellwert oder ein anderer Schwellwert wieder unterschritten, wird in den ursprünglichen Modus zurückgeschaltet.

Auch die Druckschrift EP 1 980 904 A2 zeigt eine Unterscheidung zwischen verschiedenen Modi einer Bildstabilisierung anhand eines Vergleichs mit einem bestimmten Schwellwert.

Die Druckschrift EP 1 708 019 A1 schlägt vor, einen Vergleich mit einem festen Schwellwert durchzuführen, in diesem Fall anhand eines von einer zentralen Datenverarbeitungseinheit berechneten Korrekturwerts zur Ansteuerung der Bildstabilisierungseinrichtung.

Die Druckschrift EP 0 587 432 B1 schlägt vor ein Verschwenken des fernoptischen Geräts sowohl aus dem Verlauf einer Winkelgeschwindigkeit als auch aus dem Verlauf eines sich daraus ergebenden Winkels zu detektieren. Ein Verschwenken soll immer dann vorliegen, wenn eine konstante Winkelgeschwindigkeit und ein monoton steigender Winkel gegeben sind. Liegt ein Verschwenken vor, wird die Grenzfrequenz eines Hochpassfilters angehoben, so dass eine niederfrequente Schenkbewegung gefiltert wird.

Letztlich beschäftigt sich eine vereinzelte andere Lösungsmöglichkeit in der Druckschrift US 5 444 509 A damit, eine gemessene Winkelgeschwindigkeit sowie ihre erste und ihre zweite Ableitung zur Ansteuerung einer Bildstabilisierungseinrichtung zu verwenden.

Zur Unterscheidung zwischen mehreren Modi bzw. zum Bestimmen eines bestimmten Modus für die Bildstabilisierung wird im Stand der Technik also vorgeschlagen, für jede Koordinatenrichtung separat aus einem Vergleich einer entsprechenden Winkelgeschwindigkeit mit einem festen Schwellwert oder aus einer Betrachtung eines Verlaufs der Winkelgeschwindigkeit eine Entscheidung über das Vorliegen eines bestimmten Bildstabilisierungsmodus bzw. eines Schwenkvorgangs vorzunehmen. Ein alleiniger Vergleich einer Winkelgeschwindigkeit mit einem festgesetzten Wert beeinflusst jedoch das Verhalten des fernoptischen Geräts unveränderlich. Wird ein solcher Schwellwert zu niedrig bzw. zu hoch eingereicht, wird beispielsweise eine absichtliche Bewegung des fernoptischen Geräts erkannt, obwohl diese gar nicht absichtlich ist. Des Weiteren kann es vorkommen, dass eine sehr langsame absichtliche Schwenk- bzw. Kippbewegung nicht als absichtliche Bewegung erkannt wird und folglich von der Bildstabilisierung kompensiert wird. Dies gilt insbesondere bei einer separaten Betrachtung der verschiedenen Bewegungsrichtungen. Eine Schwenkdetektion anhand einer Betrachtung des Verlaufs von Winkelgeschwindigkeit und entsprechendem Winkel führt in der Regel dazu, dass ein Beginn eines Schwenkvorgangs bzw. einer gewollten Bewegung zu spät und ein Ende des Schwenkvorgangs bzw. der gewollten Bewegung zu früh detektiert wird, so dass zeitweise ein falscher Bildstabilisierungsmodus anliegt.

Es ist daher eine Aufgabe der vorliegenden Erfindung, ein fernoptisches Gerät bzw. ein Verfahren anzugeben, das eine verbesserte, insbesondere eine schnellere und präzisere, Bestimmung eines Modus der Bildstabilisierung bereitstellt.

Gemäß einem ersten Aspekt der Erfindung wird daher vorgeschlagen, dass die Modusdetektionseinheit des Weiteren derart ausgebildet ist, dass sie den Modus bestimmt, indem sie mindestens einen Vergleichswert aus einem jeweiligen Ortsableitungswert einer aus einer ersten Bewegung und einer zweiten Bewegung des fernoptischen Geräts gebildeten Trajektorie ermittelt und den mindestens einen Vergleichswert mit einem jeweiligen Grenzwert vergleicht.

Gemäß einem zweiten Aspekt der Erfindung wird entsprechend vorgeschlagen, das eingangs genannte Verfahren dahingehend weiterzubilden, dass der Modus bestimmt wird, indem mindestens ein Vergleichswert aus einem Ortsableitungswert einer aus einer ersten Bewegung und einer zweiten Bewegung des fernoptischen Geräts gebildeten Trajektorie ermittelt wird und der mindestens eine Vergleichswert mit einem jeweiligen Grenzwert verglichen wird.

Insbesondere kann es sich bei der ersten Bewegung um eine Nickbewegung um eine Querachse des fernoptischen Geräts und bei der zweiten Bewegung um eine Gierbewegung um eine Hochachse des fernoptischen Geräts handeln. Bei der Trajektorie handelt es sich dann um eine so genannte Winkeltrajektorie. Dabei werden die zwei zueinander orthogonalen Winkelgeschwindigkeiten um die Hochachse und die Querachse des fernoptischen Geräts gemessen. Durch zeitliche Integration werden hieraus zwei zueinander orthogonale Winkelauslenkungen berechnet. Die Kurve, die man erhält, wenn man die Winkelauslenkungen x und y gegeneinander aufträgt, wird als Winkeltrajektorie bezeichnet. Entsprechend kann auch mit anderen Bewegungen vorgegangen werden, bspw. mit Bewegungen senkrecht zu einer optischen Achse des fernoptischen Geräts. Auch hier können Geschwindigkeiten in entsprechenden Raumrichtungen gemessen, aufintegriert und gegeneinander aufgetragen werden, um eine entsprechende Trajektorie zu erhalten. Zur Detektion eines bestimmten Modus werden dann zunächst räumliche Ableitungen und ggf. zweite räumliche Ableitungen berechnet. Durch einen Vergleich dieser Ableitungen mit Grenzwerten entweder zu diskreten Zeitpunkten oder über bestimmte Zeiträume erhält man eine schnelle und präzise Detektion eines Beginns und eines Endes einer bestimmten Bewegungssituation. Insbesondere kann neben einer Verwendung der eigentlichen Werte der Ableitungen auch eine Norm der Ortsableitung betrachtet werden, bspw. die Betragsnorm. Im Falle einer Betrachtung über ein bestimmtes Zeitintervall kann bspw. auch eine mittels eines Kurvenintegrals bestimmte Bogenlänge eines Ortsableitungswerts mit einem Grenzwert verglichen werden oder eine beliebige Norm über das Integral der Ortsableitungswerte in einem bestimmten Zeitintervall betrachtet werden. Auf diese verschiedenen Möglichkeiten wird im Folgenden noch detaillierter eingegangen.

Der Begriff "Norm" ist dabei in seinem mathematischen Sinn zu verstehen. Insbesondere umfasst er auch den einfachen Fall einer Betragsnorm oder den Fall einer beliebigen p-Norm. Der Begriff "Ortsableitung" ist im mathematischen Sinne einer räumlichen Ableitung

$$\frac{d}{dx} \text{ bzw. } \frac{d}{dy}$$ zu verstehen, wobei x bzw. x(t) und y bzw. y(t) die "Bewegungen" sind.

Die "erste Bewegung" und die "zweite Bewegung" sind also sich über einen Zeitverlauf ändernde Positionen des fernoptischen Geräts. Eine Position kann dabei beispielsweise eine Winkellage um die Querachse des fernoptischen Geräts, der sogenannte Nickwinkel, oder eine Winkellage um die Hochachse des fernoptischen Geräts sein, der sogenannte Gierwinkel. Die erste Bewegung kann dann beispielsweise der zeitliche Verlauf des Nickwinkels sein. Die zweite Bewegung kann dann beispielsweise der zeitliche Verlauf des Gierwinkels sein. Zu einem jeweiligen bestimmten Zeitpunkt ergeben sich daraus Wertepaare von Nickwinkel und Gierwinkel, die übereinander zu einer Winkeltrajektorie aufgetragen werden können.

Bei dem Begriff "Trajektorie" kann es sich aber allgemein um beliebige, gegeneinander aufgetragene Positionen des fernoptischen Geräts handeln. Werden Winkel übereinander aufgetragen, handelt es sich entsprechend um eine Winkeltrajektorie, es können aber bspw. auch Auslenkungen senkrecht zu einer optischen Achse des fernoptischen Geräts gegeneinander aufgetragen werden. Unter einer "Bewegung" kann somit sowohl der zeitliche Verlauf einer bestimmten Winkelauslenkung um eine der Koordinatenachsen, aber auch eine transversale Auslenkung in Richtung einer der Koordinatenachsen verstanden werden.

Ein "Grenzwert" ist ein Wert, der mit dem "Vergleichswert" verglichen wird. Der Grenzwert wird einmalig festgesetzt, in einer Ausführungsform kann auch vorgesehen sein, dass der Grenzwert als Parameter ausgebildet ist. Der "Vergleichswert" ist derjenige Wert, der mit dem "Grenzwert" verglichen wird. Der "Vergleichswert" wird aus dem "Ortsableitungswert" gebildet. Bei dem "Ortsableitungswert" kann es sich um den tatsächlichen Wert einer ersten, aber auch einer zweiten Ortsableitung nach einer bestimmten Richtung eines Koordinatensystems handeln. Bei dem "Ortsableitungswert" kann es sich jedoch auch um den Ergebniswert einer Funktion handeln, die basierend auf einer oder mehreren Ortsableitungen zu bestimmten Zeitpunkten gebildet wurde.

Insgesamt hat sich herausgestellt, dass die Betrachtung räumlicher Ableitungen bzw. von Ortsableitungen einer Trajektorie bzw. Winkeltrajektorie des fernoptischen Geräts eine deutlich schnellere und präzisere Analyse einer Bewegungssituation des fernoptischen Geräts ermöglicht, insbesondere eine schnellere und präzisere Unterscheidung zwischen gewollten Bewegungen, das heißt Schwenkbewegungen eines Nutzers des fernoptischen Geräts, und ungewollten Bewegungen, das heißt durch einen Nutzer bzw. einen Untergrund, bspw. ein Schiff, hervorgerufenen Zitterbewegungen bzw. Zitterdrehbewegungen des fernoptischen Geräts.

Insbesondere kann vorgesehen sein, dass die Mehrzahl von Modi genau zwei Modi aufweist. Dem ersten Modus kann dabei eine Bewegungssituation zugeordnet sein, die "gewollten Bewegungen" entspricht. Dem zweiten Modus kann dabei eine Bewegungssituation zugeordnet sein, die "ungewollten Bewegungen" entspricht. Da bei einem fernoptischen Gerät in erster Linie für eine Bildstabilisierung die Drehbewegungen um eine Hochachse und Drehbewegungen um eine Querachse des fernoptischen Geräts kompensiert werden müssen, kann es sich bei der ersten Bewegung insbesondere um eine Drehbewegung um eine Querachse des fernoptischen Geräts und bei der zweiten Bewegung um eine Drehbewegung um eine Hochachse des fernoptischen Geräts handeln. Die Trajektorie ist dann eine Winkeltrajektorie, bei der Winkelauslenkungen um die Querachse und um die Hochachse gegeneinander aufgetragen sind.

Gemäß einem dritten Aspekt der Erfindung wird ein Computerprogramm mit Programmcodemitteln bereitgestellt, das dazu ausgebildet ist, alle Schritte eines Verfahrens gemäß dem zweiten Aspekt der Erfindung oder einer seiner Ausgestaltungen auszuführen, wenn das Computerprogramm auf einem Computer ausgeführt wird.

Gemäß einem vierten Aspekt der Erfindung wird ein Computerprogrammprodukt mit Programmcodemitteln bereitgestellt, die auf einem computerlesbaren Datenträger gespeichert sind, um ein Verfahren gemäß dem zweiten Aspekt der Erfindung oder einer seiner Ausgestaltungen durchzuführen, wenn das Computerprogramm auf einem Computer oder einer entsprechenden Datenverarbeitungseinheit ausgeführt wird.

Das Computerprogramm gemäß dem dritten Aspekt der Erfindung und das Computerprogrammprodukt gemäß dem vierten Aspekt der Erfindung stellen folglich softwareimplementierte Lösungsmöglichkeiten für ein fernoptisches Gerät dar, bspw. kann es sich bei der Datenverarbeitungseinheit um die Signalverarbeitungseinheit des fernoptischen Geräts handeln.

Die eingangs gestellte Aufgabe wird daher vollkommen gelöst.

In einer Ausgestaltung des fernoptischen Geräts gemäß dem ersten Aspekt der Erfindung ist vorgesehen, dass der Vergleichswert einer Bogenlänge des Ortsableitungswerts über einen ersten Zeitraum ist.

Entsprechend kann auch bei dem Verfahren gemäß dem zweiten Aspekt der Erfindung vorgesehen sein, dass der Vergleichswert eine Bogenlänge des Ortsableitungswerts über einen ersten Zeitraum ist.

Wird der Ortsableitungswert dabei aus einer ersten Ortsableitung der Trajektorie gebildet, kann die Bogenlänge bspw. mittels der Formel

$$\int\limits_{t-\Delta t}^{t} \left\| \frac{d}{d\tau}\frac{dy}{dx}(\tau) \right\|_{euklid} d\tau$$

gebildet sein. Dabei ist t der Zeitpunkt, zu dem die Bogenlänge ermittelt wird, $\Delta t$ stellt die Länge des ersten Zeitraums dar, $\tau$ ist die Integrationsvariable, y und x sind die zeitlichen Verläufe der ersten Bewegung bzw. der zweiten Bewegung. Somit kann es sich bspw. bei y um eine Winkelauslenkung um die Hochachse des fernoptischen Geräts und bei x um eine Winkelauslenkung um die Querachse des fernoptischen Geräts handeln. In der dargestellten Formel ist die Ortsableitung in x-Richtung gebildet, selbstverständlich kann die Ortsableitung auch in die y-Richtung gebildet sein. Die Bogenlänge des Ortsableitungswerts über einen ersten Zeitraum kann bspw. eine Größe darstellen, mit der verlässlich anhand eines Vergleichs in einem jeweiligen Grenzwert das Vorliegen einer bestimmten Bewegungssituation ermittelt werden kann.

In einer weiteren Ausgestaltung des fernoptischen Geräts gemäß dem ersten Aspekt der Erfindung kann vorgesehen sein, dass der Vergleichswert eine Norm des jeweiligen Ortsableitungswerts zu einem diskreten Zeitpunkt ist. In einer weiteren Ausgestaltung des fernoptischen Geräts gemäß dem ersten Aspekt der Erfindung kann vorgesehen sein, dass der Vergleichswert ein Integral einer Norm des jeweiligen Ortsableitungswerts über einen zweiten Zeitraum ist.

Entsprechend kann auch bei dem Verfahren dem zweiten Aspekt der Erfindung vorgesehen sein, dass der Vergleichswert eine Norm des jeweiligen Ortsableitungswerts zu einem diskreten Zeitpunkt ist. Entsprechend kann auch bei dem Verfahren dem zweiten Aspekt der Erfindung vorgesehen sein, dass der Vergleichswert ein Integral einer Norm des jeweiligen Ortsableitungswerts über einen zweiten Zeitraum ist.

Bei der Norm kann es sich im einfachsten Fall um die Betragsnorm handeln, insbesondere wenn die Norm zu einem diskreten Zeitpunkt bestimmt ist. Ist der Vergleichswert ein Integral einer Norm des jeweiligen Ortsableitungswerts über einen zweiten Zeitraum, kann insbesondere eine p-Norm des Signals in dem zweiten Zeitraum ermittelt werden.

Die Bestimmung des Vergleichswerts anhand einer Norm zu einem diskreten Zeitpunkt ist mathematisch relativ einfach und ermöglicht einen einfachen Vergleich mit einem jeweiligen Grenzwert. Jedoch kann es insbesondere bei Zitterbewegungen zu vielen Nulldurchgängen des Vergleichswerts kommen, was aufgrund der dabei häufig zu behandelnden Nullwerte zu Fehlern führen kann. Dafür ist der Vergleich zu einem diskreten Zeitpunkt sehr schnell. Demgegenüber bietet die Ermittlung des Vergleichswerts anhand eines Integrals der Norm über einen zweiten Zeitraum einen robuster zu behandelnden Wert, da in der Regel keinerlei Nulldurchgänge des Vergleichswerts bzw. zu behandelnde Nullwerte auftreten. Jedoch ist das Signal über dem zweiten Zeitraum zu integrieren, so dass eine Zeitverzögerung um den zweiten Zeitraum auftritt. Jede der beiden Alternativen kann abhängig von einem Anwendungsfall vorteilhaft sein.

Als Alternative kann sowohl bei dem fernoptischen Gerät gemäß dem ersten Aspekt als auch dem Verfahren gemäß dem zweiten Aspekt der Erfindung vorgesehen sein, dass der Vergleichswert dem jeweiligen Ortsableitungswert entspricht, das heißt, es wird keine Norm des Ortsableitungswerts gebildet. Es kann auch sowohl bei dem fernoptischen Gerät gemäß dem ersten Aspekt als auch dem Verfahren gemäß dem zweiten Aspekt der Erfindung vorgesehen sein, dass der Vergleichswert der Mittelwert der Ortsableitungswerte über einen bestimmten Zeitraum ist.

In einer Ausgestaltung des fernoptischen Geräts gemäß dem ersten Aspekt der Erfindung ist vorgesehen, dass der jeweilige Ortsableitungswert eine Ortsableitung der Trajektorie zu einem diskreten Zeitpunkt ist. In einer weiteren Ausgestaltung des fernoptischen Geräts gemäß dem ersten Aspekt der Erfindung ist vorgesehen, dass der jeweilige Ortsableitungswert ein Integral einer Ortsableitung der Trajektorie über einen dritten Zeitraum ist.

Entsprechend kann auch bei dem Verfahren gemäß dem zweiten Aspekt der Erfindung vorgesehen sein, dass der jeweilige Ortsableitungswert eine Ortsableitung der Trajektorie zu einem diskreten Zeitpunkt ist. Entsprechend kann auch bei dem Verfahren gemäß dem zweiten Aspekt der Erfindung vorgesehen sein, dass der jeweilige Ortsableitungswert ein Integral einer Ortsableitung der Trajektorie über einen dritten Zeitraum ist.

Entsprechend kann also auch der Ortsableitungswert selbst ein bestimmter Wert der Ortsableitung zu einem diskreten Zeitpunkt sein, oder der Ortsableitungswert kann aus einem Integral der Ortsableitungen über einen bestimmten, dritten Zeitraum gebildet sein.

Die Vor- und Nachteile hinsichtlich Schnelligkeit und Robustheit der Bestimmung des Ortsableitungswerts ergeben sich im Wesentlichen ähnlich zu der Ermittlung des Vergleichswerts. Als Alternative kann auch vorgesehen sein, dass der Ortsableitungswert einem Mittelwert der Ortsableitungen über einen bestimmten Zeitraum entspricht.

In einer weiteren Ausgestaltung des fernoptischen Geräts gemäß dem ersten Aspekt der Erfindung ist vorgesehen, dass die Norm der Absolutbetrag ist. In noch einer weiteren Ausgestaltung des fernoptischen Geräts gemäß dem ersten Aspekt der Erfindung ist vorgesehen, dass die Norm eine p-Norm ist, insbesondere die euklidische Norm.

Des Weiteren kann entsprechend auch bei dem Verfahren gemäß dem zweiten Aspekt der Erfindung vorgesehen sein, dass die Norm der Absolutbetrag ist. Des Weiteren kann entsprechend auch bei dem Verfahren gemäß dem zweiten Aspekt der Erfindung vorgesehen sein, dass die Norm eine p-Norm ist, insbesondere die euklidische Norm.

Selbstverständlich können auch weitere p-Normen vorgesehen sein, wobei p ein Parameter ist, der eine ganze Zahl größer Null ist. Beispielsweise kann auch eine Norm für p = 16 verwendet werden. Die Verwendung des Absolutbetrags als Norm ermöglicht eine einfache Berechnung der Norm und somit geringen Rechenaufwand. Insbesondere kann vorgesehen sein, dass der Ortsableitungswert als Integral über einen Zeitraum $\Delta t$ bestimmt wird und eine p-Norm dieses Ortsableitungswerts als Vergleichswert ermittelt wird. Der Vergleichswert ergibt sich dann zu

$$\gamma(t) = \left( \frac{1}{\Delta t} \cdot \int_{t-\Delta t}^{t} |\omega(s)|^p \, ds \right)^{\frac{1}{p}}.$$

Dabei ist $\gamma$ der Vergleichswert, t der Zeitpunkt über der Bestimmung des Vergleichswerts, $\Delta t$ der zweite Zeitraum, über den der Ortsableitungswert bestimmt wird, $\omega$ die Ortsableitung zum Zeitpunkt s und s die Integrationsvariable. Der Parameter p entspricht der entsprechenden p-Norm und ist somit eine ganze Zahl größer Null. Je höher p gewählt ist, desto stärker werden größere Ortsableitungswerte bei der Bestimmung der Norm gewichtet, so dass ein Ansteigen des Ortsableitungswerts zu einem steileren Ansteigen des Vergleichswerts führt. Damit kann ein schnelleres Erkennen einer bestimmten Bewegungssituation bzw. ein Ansteuern in einem dieser Bewegungssituation zugeordneten Modus erfolgen.

In einer weiteren Ausgestaltung eines fernoptischen Geräts gemäß dem ersten Aspekt der Erfindung kann vorgesehen sein, dass die Ortsableitung eine erste Ableitung der Trajektorie nach der ersten Bewegung oder nach der zweiten Bewegung ist. Alternativ oder, im Fall mehrerer Vergleichswerte, kumulativ kann des Weiteren vorgesehen sein, dass die Ortsableitung eine zweite Ableitung der Trajektorie nach der ersten Bewegung oder der zweiten Bewegung ist.

Entsprechend kann auch bei dem Verfahren dem zweiten Aspekt der Erfindung vorgesehen sein, dass die Ortsableitung eine erste Ableitung der Trajektorie nach der ersten Bewegung oder nach der zweiten Bewegung ist. Alternativ oder, im Fall mehrerer Vergleichswerte, kumulativ kann auch hier vorgesehen sein, dass die Ortsableitung eine zweite Ableitung der Trajektorie nach der ersten Bewegung oder der zweiten Bewegung ist.

Wird bspw. eine Winkeltrajektorie dargestellt, wird eine Drehbewegung um die Hochachse (y) über eine Drehbewegung um die Querachse (x) aufgetragen. Dann kann die Ortsableitung wie folgt gebildet sein

$$\frac{\mathrm{dx}}{\mathrm{dy}}, \ \frac{\mathrm{dy}}{\mathrm{dx}}, \ \frac{\mathrm{d}^2 y}{\mathrm{dx}^2} \ \text{und/oder} \ \frac{\mathrm{d}^2 x}{\mathrm{dy}^2}.$$

Grundsätzlich kann eine Betrachtung der ersten Ableitung der Trajektorie in eine oder beide Richtungen bzw. nach einer oder beiden Bewegungen ausreichend sein, um eine bestimmte Bewegungssituation präzise zu erkennen. Alternativ oder kumulativ kann jedoch auch eine Betrachtung der zweiten Ableitungen erfolgen, die regelmäßig sensibler auf Bewegungsänderungen reagieren und daher größere Änderungen aufweisen. Dies kann eine noch schnellere und noch präzisere Erkennung bestimmter Bewegungssituationen, insbesondere einer gewollten Schwenkbewegung, ermöglichen.

In einer weiteren Ausgestaltung des fernoptischen Geräts gemäß dem ersten Aspekt der Erfindung kann vorgesehen sein, dass die Ortsableitung die betragskleinere von den ersten Ableitungen der Trajektorie nach der ersten Bewegung und der zweiten Bewegung ist. Alternativ oder, im Fall mehrerer Vergleichswerte, kumulativ kann vorgesehen sein, dass die Ortsableitung die betragskleinere von den zweiten Ableitungen der Trajektorie nach der ersten Bewegung und der zweiten Bewegung ist.

Entsprechend kann auch bei dem Verfahren gemäß dem zweiten Aspekt der Erfindung vorgesehen sein, dass die Ortsableitung die betragskleinere von den ersten Ableitungen der Trajektorie nach der ersten Bewegung und der zweiten Bewegung ist. Alternativ oder, im Fall mehrerer Vergleichswerte, kumulativ kann entsprechend vorgesehen sein, dass die Ortsableitung die betragskleinere von den zweiten Ableitungen der Trajektorie nach der ersten Bewegung und der zweiten Bewegung ist.

Auf diese Weise wird die räumliche Ableitung bzw. die Ortsableitung in beide Richtungen in die Betrachtung einbezogen, was eine zuverlässigere Erkennung bestimmter Bewegungssituationen ermöglicht. Beispielsweise wird bei einer gewollten Bewegung des fernoptischen Geräts, bspw. einem Verschwenken durch den Nutzer, mindestens eine der beiden räumlichen Ableitungen klein. Daher ist es zur Bestimmung einer gewollten Bewegung bzw. eines Verschwenkens vorteilhaft, das Minimum der Beträge der beiden Ortsableitungen zu bestimmen.

In einer weiteren Ausgestaltung des fernoptischen Geräts gemäß dem ersten Aspekt der Erfindung kann vorgesehen sein, dass die erste Bewegung eine Drehbewegung ist und die zweite Bewegung eine Drehbewegung ist und die Trajektorie eine Winkeltrajektorie ist.

Entsprechend kann auch bei dem Verfahren gemäß dem zweiten Aspekt der Erfindung vorgesehen sein, dass die erste Bewegung eine Drehbewegung ist und die zweite Bewegung eine Drehbewegung ist und die Trajektorie eine Winkeltrajektorie ist.

Wie bereits voranstehend ausgeführt wurde, sind bei fernoptischen Geräten zur Bildstabilisierung insbesondere die Bewegungen um die Hochachse und die Querachse des fernoptischen Geräts maßgeblich. Insofern ist es vorteilhaft, wenn die erste Bewegung und die zweite Bewegung jeweils Drehbewegungen sind, eine um die Hochachse und eine um die Querachse des fernoptischen Geräts. Entsprechend ergibt sich dann für die Trajektorie, dass diese eine Winkeltrajektorie ist, die die Winkelauslenkung um die Hochachse und die Winkelauslenkung um die Querachse gegeneinander bzw. übereinander aufträgt.

In einer weiteren Ausgestaltung des fernoptischen Geräts gemäß dem ersten Aspekt der Erfindung kann vorgesehen sein, dass die Modusdetektionseinheit derart ausgebildet ist, dass sie mehr als einen Vergleichswert ermittelt und Ergebnisse eines jeweiligen Vergleichs jedes Vergleichswerts mit einem jeweiligen Grenzwert durch ein Logikgatter verknüpft sind.

Entsprechend kann auch bei dem Verfahren gemäß dem zweiten Aspekt der Erfindung vorgesehen sein, dass mehr als ein Vergleichswert ermittelt wird und Ergebnisse eines jeweiligen Vergleichs des Vergleichswerts mit einem jeweiligen Grenzwert durch ein Logikgatter verknüpft werden.

Auf diese Weise ist es möglich, Bedingungen für verschiedene Vergleichswerte abzufragen, die beispielsweise aus verschiedenen Ortsableitungen bestimmt wurden oder aus verschiedenen Normen für bestimmte Ortsableitungswerte ermittelt wurden. Eine entsprechende Verknüpfung der Ergebnisse mittels eines Logikgatters, bei dem es sich beispielsweise um ein einfaches AND-Gatter handeln kann, ermöglichen eine Auswertung der Vergleiche und die Ausgabe eines Ergebnisses für das Vorliegen einer bestimmten Bewegungssituation bzw. eines bestimmten Modus zur Ansteuerung einer Bildstabilisierungseinrichtung.

In einer weiteren Ausgestaltung des fernoptischen Geräts gemäß dem ersten Aspekt der Erfindung ist vorgesehen, dass die Modusdetektionseinheit derart ausgebildet ist, dass ein erster Vergleichswert der mehreren Vergleichswerte einem zweiten Vergleichswert der mehreren Vergleichswerte zu einem früheren Zeitpunkt entspricht.

Entsprechend kann auch bei dem Verfahren gemäß dem zweiten Aspekt der Erfindung vorgesehen sein, dass ein erster Vergleichswert der mehreren Vergleichswerte einem zweiten Vergleichswert der mehreren Vergleichswerte zu einem früheren Zeitpunkt entspricht.

Es bedeutet also, dass ein Vergleichswert mit einer gewissen Zeitverzögerung als ein weiterer Vergleichswert benutzt wird. Insbesondere kann auf diese Weise, auch wenn die einzelnen Vergleiche lediglich anhand von Vergleichswerten zu diskreten Zeitpunkten durchgeführt werden, eine Betrachtung eines gewissen Zeitraums aufgrund der implementierten Verzögerung durchgeführt werden.

In einer weiteren Ausgestaltung des fernoptischen Geräts gemäß dem ersten Aspekt der Erfindung ist vorgesehen, dass das fernoptische Gerät des Weiteren derart ausgebildet ist, dass einem ersten Modus eine Bewegungssituation zugeordnet ist, die einem Schwenkvorgang bzw. einer gewollten Bewegung entspricht, und ein Winkelsignal oder ein Positionssignal zur Ansteuerung der mindestens eine Bildstabilisierungseinrichtung in dem ersten Modus auf Null gesetzt ist.

Entsprechend kann auch bei dem Verfahren gemäß dem zweiten Aspekt der Erfindung vorgesehen sein, dass dem ersten Modus eine Bewegungssituation zugeordnet wird, die einem Schwenkvorgang entspricht, und ein Winkelsignal oder ein Positionssignal zur Ansteuerung der mindestens einen Bildstabilisierungseinrichtung in dem ersten Modus auf Null gesetzt wird.

In einer Bewegungssituation, die einem Schwenkvorgang bzw. einer gewollten Bewegung entspricht, wird die gesamte Bewegung des fernoptischen Geräts durch die niederfrequente Schwenkbewegung dominiert. Eine Bildstabilisierung von Zitterdrehbewegungen ist in der Regel nicht notwendig. Daher ist es von Vorteil, in diesem Modus das Winkelsignal zur Ansteuerung der mindestens einen Bildstabilisierungseinrichtung auf Null zu setzen. Dies bewirkt, dass während des Schwenkvorgangs die mindestens eine Bildstabilisierungseinrichtung ihre Grundstellung, das heißt in eine jeweilige Winkelauslenkung von 0°, zurückkehrt. Dadurch wird insbesondere vermieden, dass mindestens eine Bildstabilisierungseinrichtung entgegen der gewollten Bewegung bzw. der Schwenkbewegung arbeitet und darüber hinaus eventuell eine Lage in maximaler Auslenkung einnimmt.

In einer weiteren Ausgestaltung des fernoptischen Geräts gemäß dem ersten Aspekt der Erfindung kann vorgesehen sein, dass das fernoptische Gerät des weiteren derart ausgebildet ist, dass einem ersten Modus eine Bewegungssituation zugeordnet ist, die einem Schwenkvorgang entspricht, und ein Winkelsignal oder ein Positionssignal zur Ansteuerung der mindestens einen Bildstabilisierungseinrichtung von einer Integratoreinheit erzeugt ist, und ein durch den Schwenkvorgang hervorgerufener Amplitudenversatz des Winkelsignals oder des Positionssignals eliminiert wird, indem die Integratoreinheit bei einem Verlassen des ersten Modus auf Null zurückgesetzt ist.

Entsprechend kann auch bei dem Verfahren gemäß dem zweiten Aspekt der Erfindung vorgesehen sein, dass einem ersten Modus eine Bewegungssituation zugeordnet wird, die einem Schwenkvorgang entspricht, und ein Winkelsignal zur Ansteuerung der mindestens einen Bildstabilisierungseinrichtung von einer Integratoreinheit erzeugt wird, und ein durch den Schwenkvorgang hervorgerufener Amplitudenversatz des Winkelsignals eliminiert wird, indem die Integratoreinheit bei einem Verlassen des ersten Modus auf Null zurückgesetzt wird.

Auf diese Weise wird sichergestellt, dass die Bildstabilisierungseinrichtung nach einem Verlassen des ersten Modus Zitterdrehbewegungen ausgehend von ihrer Grundstellung, das heißt der 0°-ausgelenkten Stellung, vornimmt. Anderenfalls würde die Bildstabilisierungseinrichtung ausgehend von einer bereits ausgelenkten Stellung eine Bildstabilisierung bewirken. Insbesondere, wenn die Bildstabilisierungseinrichtung sich bereits aufgrund des Verschwenkens in einer maximalen Auslenkung bzw. nahe an einer maximalen Auslenkung befindet, kann dann unter Umständen eine Bildstabilisierung in beide möglichen Drehrichtungen um eine bestimmte Achse nicht mehr möglich sein. Daher ist es vorteilhaft, das Ansteuerungssignal bei einem Verlassen des ersten Modus, dem der Schwenkvorgang zugeordnet ist, auf Null zurückzusetzen.

In einer weiteren Ausgestaltung des fernoptischen Geräts gemäß dem ersten Aspekt der Erfindung kann vorgesehen sein, dass das fernoptische Gerät des Weiteren derart ausgebildet ist, dass ein Positionssignal, insbesondere ein Winkelsignal, zur Ansteuerung der mindestens einen Bildstabilisierungseinrichtung von einer Integratoreinheit der Signalverarbeitungseinheit erzeugt ist, und eine Eliminierung eines durch einen Bewegungsvorgang, insbesondere ein Schwenkvorgang, hervorgerufene Amplitudenversatz des Positionssignals in einer Begrenzung des Positionssignal auf eine Maximalamplitude erfolgt, indem die Signalverarbeitungseinheit einen Subtraktionswert ermittelt, indem sie das Positionssignal durch die doppelte Maximalamplitude teilt und dann auf eine nächstliegende ganze Zahl rundet, und die nächstliegende ganze Zahl dann mit der doppelten Maximalamplitude multipliziert, und dann den Subtraktionswert von dem Positionssignal subtrahiert. Insbesondere stellt diese Ausgestaltung in Kombination mit dem Oberbegriff des Anspruchs 1 einen nebengeordneten, eigenständigen und unabhängigen Erfindungsaspekt dar.

Entsprechend kann auch bei dem Verfahren gemäß dem zweiten Aspekt der Erfindung vorgesehen sein, dass ein Positionssignal, insbesondere ein Winkelsignal, zur Ansteuerung der mindestens einen Bildstabilisierungseinrichtung von einer Integratoreinheit der Signalverarbeitungseinheit erzeugt wird, und ein durch einen Bewegungsvorgang, insbesondere einen Schwenkvorgang, hervorgerufener Amplitudenversatz des Positionssignals eliminiert und das Positionssignal auf eine Maximalamplitude begrenzt wird, indem ein Subtraktionswert ermittelt wird, indem das Positionssignal durch die doppelte Maximalamplitude geteilt und dann auf eine nächstliegende ganze Zahl gerundet wird, und die nächstliegende ganze Zahl dann mit der doppelten Maximalamplitude multipliziert wird, und dann der Subtraktionswert von dem Positionssignal subtrahiert wird. Insbesondere stellt diese Ausgestaltung in Kombination mit dem Oberbegriff des Anspruchs 16 einen nebengeordneten, eigenständigen und unabhängigen Aspekt der Erfindung dar.

Entsprechend wird auch ein Computerprogramm mit Programmcodemitteln, das dazu ausgebildet ist, alle Schritte eines solchen Verfahrens auszuführen, vorgeschlagen, wenn das Computerprogramm auf einem Computer ausgeführt wird. Des Weiteren wird ein Computerprogrammprodukt mit Programmcodemitteln vorgeschlagen, die auf einem computerlesbaren Datenträger gespeichert sind, um ein solches Verfahren durchzuführen, wenn das Computerprogramm auf einem Computer oder einer entsprechenden Datenverarbeitungseinheit ausgeführt wird.

Auf diese Weise wird es möglich, mit einer direkten Signaldurchführung ohne jedwede Verzögerung ein niederfrequentes Signal oder ein konstantes Signal bzw. einen so genannten Offset von einem hochfrequenten Signal zu trennen. Ausgegeben wird lediglich das hochfrequente Signal, das zudem auf die vorgegebene Maximalamplitude begrenzt ist. Auf diese Weise wird es besonders einfach und schnell möglich, einen Amplituden-Offset bzw. einen Amplitudenversatz, der durch ein gewolltes Verschwenken des fernoptischen Geräts durch den Nutzer hervorgerufen wurde, herauszufiltern. Das vorgeschlagene Verfahren wirkt im Sinne einer Hochpassfilterung, ohne jedoch deren Zeitverzögerung als Nachteil aufzuweisen. Insbesondere kann die vorgeschlagene Eliminierung eines Amplituden-Offset unabhängig von einem Modus dauerhaft geschaltet sein, auf diese Weise wird kein Zurücksetzen von Integratoreinheiten beim Verlassen eines bestimmten Modus benötigt. Ein weiterer Vorteil ist, dass auf diese Weise ein möglicherweise in einem verwendeten Sensorelement vorhandener Offset eines Sensorsignals herausgefiltert wird.

In einer weiteren Ausgestaltung des fernoptischen Geräts gemäß dem ersten Aspekt der Erfindung kann vorgesehen sein, dass die Signalverarbeitungseinheit das Positionssignal vor der Eliminierung des Amplitudenversatzes und der Begrenzung auf die Maximalamplitude durch einen Skalierungsfaktor teilt und nach der Eliminierung des Amplitudenversatzes und der Begrenzung auf die Maximalamplitude mit dem Skalierungsfaktor multipliziert.

Entsprechend kann auch bei dem Verfahren gemäß dem zweiten Aspekt der Erfindung vorgesehen sein, dass das Positionssignal vor der Eliminierung des Amplitudenversatzes und der Begrenzung auf die Maximalamplitude durch einen Skalierungsfaktor geteilt wird und nach der Eliminierung des Amplitudenversatzes und der Begrenzung auf die Maximalamplitude mit dem Skalierungsfaktor multipliziert wird.

Die voranstehend beschriebene Rundung erfolgt auf die nächstliegende ganze Zahl nach der üblichen Methode, das heißt ab einem Wert X,5 wird aufgerundet, darunter wird abgerundet. Eine vorgesehene Wirkung der Verschaltung wird daher nur für Maximalamplituden $\leq 1{,}0$ eines Maßes einer jeweiligen Einheit des Signals (bspw. Grad oder rad) erreicht. Entsprechend kann vorher eine Division durch einen Skalierungsfaktor erfolgen, um das Signal derart zu skalieren, dass die Maximalamplitude $\leq 1{,}0$ ist. Soll bspw. eine Maximalamplitude von $2{,}0°$ gegeben sein, würde der Skalierungsfaktor 2 betragen, das Signal zunächst durch 2 geteilt werden, so dass entsprechend auch für die Maximalamplitude nur die Hälfte des Wertes, das heißt 1,0, anzusetzen ist. Anschließend wird das Signal entsprechend wieder mit dem Skalierungsfaktor multipliziert.

In einer weiteren Ausgestaltung des fernoptischen Geräts gemäß dem ersten Aspekt der Erfindung kann vorgesehen sein, dass das fernoptische Gerät des Weiteren derart ausgebildet ist, dass ein Positionssignal, insbesondere ein Winkelsignal, zur Ansteuerung der mindestens einen Bildstabilisierungseinrichtung von einer Integratoreinheit der Signalverarbeitungseinheit erzeugt ist, und eine Eliminierung eines durch einen Bewegungsvorgang, insbesondere einen Schwenkvorgang, hervorgerufenen Amplitudenversatzes des Positionssignals erfolgt, indem die Signalverarbeitungseinheit von dem Positionssignal ein über einen vierten Zeitraum ermittelten Mittelwert des Positionssignals subtrahiert.

Entsprechend kann auch bei dem Verfahren gemäß dem zweiten Aspekt der Erfindung vorgesehen sein, dass ein Positionssignal, insbesondere ein Winkelsignal, zur Ansteuerung der mindestens einen Bildstabilisierungseinrichtung von einer Integratoreinheit der Signalverarbeitungseinheit erzeugt wird, und eine Eliminierung eines durch einen Bewegungsvorgang, insbesondere einen Schwenkvorgang, hervorgerufenen Amplitudenversatzes des Positionssignals erfolgt, indem die Signalverarbeitungseinheit von dem Positionssignal ein über einen vierten Zeitraum ermittelten Mittelwert des Positionssignals subtrahiert.

Auf diese Weise wird es insbesondere möglich, einen Amplitudenversatz bzw. einen Amplituden-Offset aufgrund einer sehr langsamen Schwenkbewegung des Nutzers herauszufiltern. Ein solcher Schwenkvorgang kann bspw. vorliegen, wenn ein Nutzer einem sich sehr langsam bewegenden Objekt folgt. Während einer solchen Bewegungssituation liegen die üblichen Zitterbewegungen bzw. Zitterdrehbewegungen vor, so dass eine Bewegungssituation, in der eine gewollte Bewegung, das heißt ein gewolltes Schwenken, vorliegt, in der Regel nicht erkannt wird. Trotzdem soll natürlich diese von der Zitterdrehbewegung überlagerte niederfrequente Schwenkbewegung nicht von der Bildstabilisierungseinrichtung nachgeführt werden. Daher wird in dieser Ausgestaltung davon ausgegangen, dass der Mittelwert der Positionssignale bzw. der Mittelwert der Winkelsignale über einen bestimmten vierten Zeitraum der von dem Benutzer gewollten Position bzw. Winkelauslenkung entspricht. Diese ist dann quasi die "Nullstellung", die entsprechend von dem tatsächlich anliegenden Positionssignal bzw. Winkelsignal subtrahiert wird. Auf diese Weise ist eine besonders effektive Behandlung auch von sehr langsamen gewollten Bewegungen möglich, die ansonsten von der Modusdetektionseinheit nicht als entsprechende Bewegungssituation für gewollte Bewegungen erkannt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Darstellung eines fernoptischen Geräts zur Erläuterung der geometrischen Verhältnisse,

Fig. 2 ein fernoptisches Gerät gemäß einer Ausführungsform in einer seitlichen schematischen Darstellung,

Fig. 3 eine schematische Darstellung der Signalverarbeitung in dem fernoptischen Gerät in Fig. 2,

Fig. 4a einen schematischen Verlauf einer Winkeltrajektorie während verschiedener Bewegungssituationen,

Fig. 4b eine schematische Darstellung eines Verlaufs einer ersten und einer zweiten Ortsableitung während der Bewegungssituationen,

Fig. 5 eine schematische Darstellung einer ersten Ausgestaltung einer zentralen Signalverarbeitung,

Fig. 6 eine schematische Darstellung einer Ausgestaltung einer Signalverarbeitung zur Eliminierung eines Amplitudenversatzes in Fig. 5,

Fig. 7 eine schematische Darstellung einer Signalverarbeitung zur Bestimmung eines Modus einer Bildstabilisierungseinrichtung und einer zugeordneten Bewegungssituation in Fig. 5,

Fig. 8    eine weitere Ausgestaltung einer zentralen Signalverarbeitung,

Fig. 9    eine schematische Darstellung der Ermittlung eines Mittelwerts zur Eliminierung des Amplitudenversatzes bei langsamen Schwenkbewegungen in Fig. 8,

Fig. 10    eine schematische Darstellung einer weiteren Ausgestaltung einer Signalverarbeitung zur Bestimmung eines bestimmten Modus einer zugeordneten Bewegungssituation in Fig. 8,

Fig. 11    eine schematische Darstellung eines ersten Abschnitts der Signalverarbeitung in Fig. 10,

Fig. 12    eine schematische Darstellung eines zweiten Abschnitts einer Signalverarbeitung in Fig. 10, und

Fig. 13    eine schematische Darstellung eines dritten Abschnitts einer Signalverarbeitung in Fig. 10.

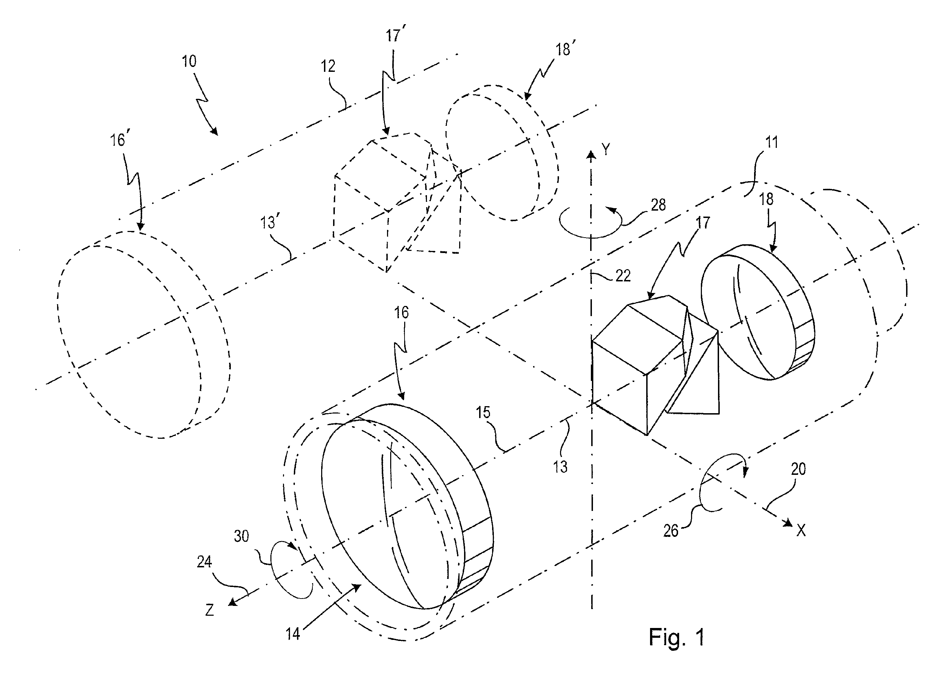

Die Fig. 1 zeigt eine schematische Darstellung eines fernoptischen Geräts 10 zunächst zur Erläuterung der Verhältnisse in einem bildstabilisierten fernoptischen Gerät.

Das dargestellte fernoptische Gerät 10 weist einen ersten Tubus 11 auf. Darüber hinaus kann das fernoptische Gerät einen zweiten Tubus 12, etwa einem binokularen Fernrohr, aufweisen. Die Verhältnisse werden im Folgenden in der Regel beispielhaft an einem fernoptischen Gerät 10 mit lediglich einem ersten Tubus 11 erläutert, ohne dass dies einschränkend zu verstehen ist.

Der erste Tubus 11 erstreckt sich entlang seiner Längsachse 13. In dem ersten Tubus 11 ist ein optisches System 14 vorgesehen, das sich entlang einer optischen Achse 15 erstreckt. In der dargestellten Ausrichtung fallen die optische Achse 15 und die Längsachse 13 zusammen. Im Rahmen einer Bildstabilisierung werden die optische Achse 15 und die Längsachse 13 jedoch relativ zueinander bewegt, um eine Bildstabilisierung zu bewirken. Das optische System 14 weist ein Objektiv 16, ein Umkehrsystem 17 und ein Okular 18 als optische Baugruppen auf. Darüber hinaus können noch weitere optische Baugruppen vorgesehen sein. Die Darstellung des Umkehrsystems 17 als prismatisches Umkehrsystem ist ebenfalls lediglich beispielhaft zu verstehen, es kann auch ein anderes Umkehrsystem, beispielsweise ein Linsenumkehrsystem, verwirklicht sein.

Eine Querachse 20 des fernoptischen Geräts 10 und eine Hochachse 22 des fernoptischen Geräts 10 bilden zusammen mit der Längsachse 13 ein kartesisches Koordinatensystem. Die Längsachse 15 bildet dabei die dritte Achse 24, die auf der Hochachse 22 und der Querachse 20 senkrecht steht. Eine Bildstabilisierung kann grundsätzlich translatorische Bewegungen in Richtung jeder der drei Koordinatenachsen 20, 22, 24 bewirken. Darüber hinaus ist auch die Kompensation von rotatorischen Bewegungen möglich, nämlich einer Nickbewegung 26 um die Querachse 20, einer Gierbewegung 28 um die Hochachse 22 und einer Rollbewegung 30 um die Längsachse 13 bzw. 24. Bezüglich von Zitterbewegungen bzw. Schwenkbewegungen sind dabei die Nickbewegungen 26 und die Gierbewegung 28 am bedeutsamsten. Die Bildstabilisierung wird dabei nachfolgend beispielhaft anhand eines fernoptischen Geräts 10 beschrieben, bei dem eine Bildstabilisierung zur Kompensation der Drehbewegungen um die Querachse 20 und die Hochachse 22, nämlich der Nickbewegung 26 und die Hochachse 22, nämlich der Nickbewegung 26 und Gierbewegung 28, erfolgt. Dies ist jedoch ohne Einschränkung der Erfindung zu verstehen.

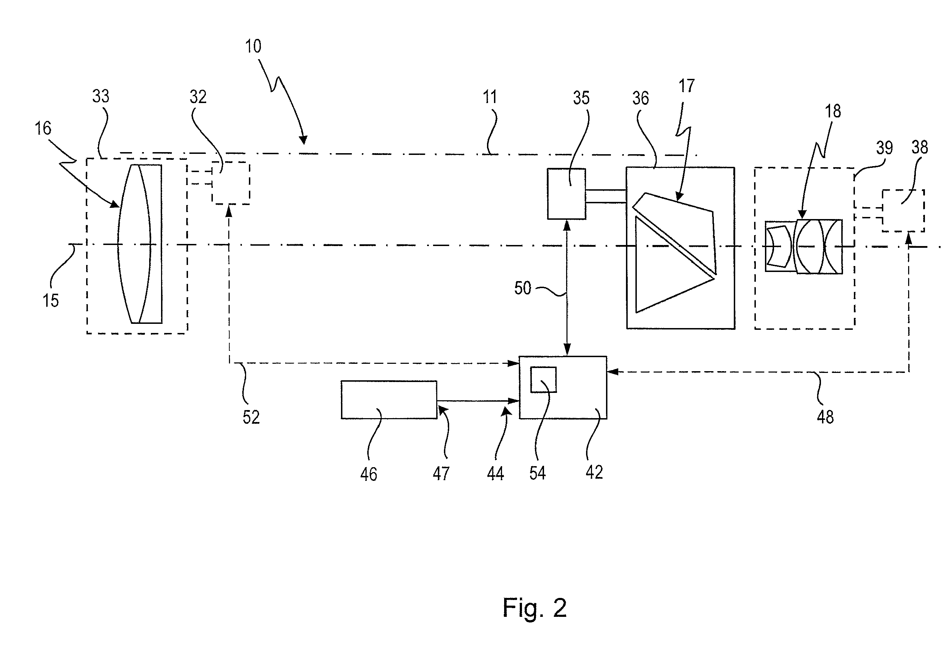

Die Fig. 2 zeigt in seitlicher Ansicht eine schematisch vereinfachte Darstellung des ersten Tubus 11 des fernoptischen Geräts 10. Eingezeichnet sind Aktuatoren 32 einer Bildstabilisierungseinrichtung 33 des Objektivs 16, Aktuatoren 35 einer Bildstabilisierungseinrichtung 36 des Umkehrsystems 17 und Aktuatoren 38 der Bildstabilisierungseinrichtung 39 des Okulars 18. Dabei ist lediglich die Bildstabilisierungseinrichtung 36 mit ihren Aktuatoren 35 in durchgezogenen Linien dargestellt. In dem geschilderten Ausführungsbeispiel erfolgt daher eine Bildstabilisierung lediglich durch ein Verkippen des Umkehrsystems 17 um die Hochachse 22 und um die Querachse 24. Grundsätzlich sind im Rahmen der vorliegenden Erfindung jedoch auch Bewegungen des Objektivs 16 und/oder des Okulars 18 möglich. Es sind auch Bildstabilisierungseinrichtungen bekannt, in denen beispielsweise sowohl das Umkehrsystem 17 als auch das Okular 18 gemeinsam, d.h. von einer Bildstabilisierungseinrichtung, bewegt werden. Das dargestellte Ausführungsbeispiel somit lediglich beispielhaft zu verstehen. Es muss lediglich mindestens eine der optischen Baugruppen 16, 17, 18 relativ zu dem Tubus 11 bewegbar sein.

Das fernoptische Gerät 10 weist des Weiteren eine Signalverarbeitungseinheit 42 auf, die die zentrale Signalverarbeitung in dem fernoptischen Gerät 10 leistet. Ein Eingangssignal 44 wird von mindestens einem Sensorelement 46 ermittelt und in die Signalverarbeitungseinheit 42 eingegeben.

Die Signalverarbeitungseinheit kommuniziert mittels einer entsprechenden Leitung 48, 50, 52 mit einer Regelungseinrichtung eines entsprechenden Aktuators 32, 35, 38 einer entsprechenden Bildstabilisierungseinrichtung 33, 36, 39.

Die Bildstabilisierung erfolgt dann durch eine Verkippung des Umkehrsystems 17 durch die Aktuatoren 35 der Bildstabilisierungseinrichtung 36. Auf diese Weise wird innerhalb des optischen Systems 14 das Zwischenbild so verschoben, dass eine Bewegung des ersten Tubus 11 kompensiert wird. Die Ansteuerung der Aktuatoren 35 erfolgt mittels der Signalverarbeitungseinheit 42. Entsprechend wird es dadurch möglich, das Umkehrsystem 17 relativ zu dem ersten Tubus 11 zu verstellen, so dass in diesem Fall eine Längsachse 13 des ersten Tubus 11 und eine optische Achse 15 auseinanderfallen können. Die Darstellung in der Fig. 2 ist dabei, wie bereits voranstehend ausgeführt, lediglich beispielhaft zu verstehen. Es muss lediglich mindestens eine der optischen Baugruppen 16, 17, 18 relativ zu dem ersten Tubus 11 bewegbar sein, entsprechend ergeben sich dann auch andere Drehpunkte bzw. Verläufe der optischen Achse 15. Entsprechend verhält es sich bei einer Kompensation von translatorischen Bewegungen mittels mindestens einer der optischen Baugruppen 16, 17, 18.

Um das Umkehrsystem 17 in der beispielhaft dargestellten Ausführungsform um sowohl eine Hochachse 22 als auch um eine Querachse 20 verkippen zu können, wird es an einer zweiachsigen Kardanik (nicht dargestellt) aufgehängt, wobei die Achsen der Kardanik entsprechend orthogonal zueinander und senkrecht auf der Längsachse 13 stehen. Zur Ausführung der Kardanik sind dem Durchschnittsfachmann in erster Linie zwei Bauarten geläufig, zum einen kann jede Achse der Kardanik in zwei Kugellagern geführt werden oder aber es können Blattfederelemente als Festkörpergelenke zur Aufhängung des Umkehrsystems verwendet werden. Festkörpergelenke besitzen dabei Vorteile einer höheren Positionsgenauigkeit, da sie ein geringeres mechanisches Spiel aufweisen, und günstigere Produktionskosten.

Bei den Aktuatoren 32, 35, 38 handelt es sich in der Regel um linear bewegbare Aktuatoren. Diese sind in einigem Abstand von der Längsachse 13 bzw. der optischen Achse 15 über einen Hebel angeordnet, so dass die lineare Bewegung in eine entsprechende Rotationsbewegung umgewandelt wird. Als Aktuatoren kommen vor allem drei Typen in Betracht, Voice-Coil-Motoren, Schrittmotoren und Piezo-Linearantriebe.

Bei der Verwendung von Voice-Coil-Motoren wird eine elektromagnetische Spule entweder am Umkehrsystem, in einem Zwischenring der Kardanik oder an dem Tubus 11 bzw. einem Außenring der Kardanik befestigt. Die Schwenkbewegung erfolgt wiederum beispielhaft anhand einer vorgesehenen Bildstabilisierung um die Hochachse 22 und die Querachse 20. Bei entsprechend anders vorgesehenen Bildstabilisierungen für Rotations- oder Translationsbewegungen kann der Fachmann die entsprechenden Abwandlungen durchführen. Ein passender Permanentmagnet oder ebenfalls eine elektromagnetische Spule wird als Gegenpart an dem Zwischenring der Kardanik, dem ersten Tubus 11 bzw. den Außenring oder dem Umkehrsystem 17 angebracht, so dass beim Beaufschlagen der Spule mit einem Strom eine magnetische Kraft zwischen den Komponenten entsteht, die das Umkehrsystem 17 um die entsprechenden Drehachse 20, 22 dreht. Da die Voice-Coil-Motoren keine Haltekraft besitzen, müssen die Kardangelenke vor einem Abschalten der Bildstabilisierung zusätzlich mechanisch arretiert werden. Dabei müssen für den Fall eines binokularen fernoptischen Geräts 10 die Kardangelenke in einem arretierten Zustand in dem ersten Tubus 11 und dem zweiten Tubus 12 so zueinander fixiert sein, dass ein paralleler Strahldurchtritt gewährleistet ist, so dass ein Nutzer des fernoptischen Geräts 10 kein Doppelbild zwischen dem Bild des optischen Systems 14 des ersten Tubus 11 und dem Bild des optischen Systems 14' des zweiten Tubus 12 erhält, die sogenannte binokulare Justage. Bei der Verwendung von Voice-Coil-Motoren existiert keine starre Kopplung zwischen der Spulenwicklung und dem verwendeten Permanentmagneten. Dabei können auch Konfigurationen des Kardangelenks gewählt werden, bei dem sich die Achsbewegungen gegenseitig beeinflussen. Dadurch können die Aktuatoren für beide Achsen zum Beispiel an dem ersten Tubus 11 oder an dem äußeren Ring des Kardangelenks angeordnet werden. Der Permanentmagnet für die erste Achse auf dem Zwischenring und der zweite Permanentmagnet können auf dem Prismensystem 17 selbst platziert werden. Dadurch brauchen keine bewegten Anschlussleitungen für die Aktuatoren verwendet werden.

Im Falle der Verwendung von Schrittmotoren treibt ein Schrittmotor zunächst eine Gewindespindel an. Von dieser Gewindespindel wird ein Mitnehmer angetrieben, der eine lineare Bewegung entlang der Spindel vollführt. Dieser wird über einen Hebel an das Umkehrsystem 17 angeschlossen, so dass die lineare Bewegung in eine Drehbewegung umgewandelt wird. Dazu wird ein Motor an dem ersten Tubus 11 bzw. an dem Außenring der Kardanik befestigt und treibt über einen Hebel den Innenring der Kardanik an. Der zweite Motor wird an den Innenring der Kardanik befestigt und treibt über einen Hebel das eigentliche Umkehrsystem 17 an. Durch diese Anordnung besteht keine gegenseitige Beeinflussung der beiden Achsen. Die Verwendung von Schrittmotoren mit Spindelantrieb hat den Vorteil, dass sehr große Haltekräfte und große Antriebskräfte bereitgestellt werden können. Dadurch können effizient auch Umkehrsysteme 17 für große fernoptische Geräte 10 bewegt werden und es kann auf eine zusätzliche Arretierung des Umkehrsystems 17 verzichtet werden. Außerdem sind Schrittmotoren als Standardbauteile sehr kostengünstig.

Bei der Verwendung eines Piezo-Linearantriebs wird eine schwingende Piezokeramik in Verbindung mit einem Reibelement als Gegenpart verwendet. Durch Hin- und Herschwingen der Piezokeramik in unterschiedlichen Arten wird das gegenüberliegende Reibelement bewegt. Die Kopplung zwischen Piezokeramik und Reibelement erfolgt dabei über Reib- und Auflagekräfte. Da diese Kopplung nicht starr ausgebildet ist, kann der Reibpunkt auch senkrecht zur Bewegungsrichtung verschoben werden, so dass auch Anordnungen zwischen zwei Aktuatoren möglich sind, die nicht orthogonal zueinander sind oder die sich gegenseitig beeinflussen. Daher können beide Aktuatoren für einen ersten Tubus 11 an dem ersten Tubus 11 bzw. an dem Außenring der Kardanik befestigt werden. Das Reibelement des einen Aktuators befindet sich dann auf dem Innenring und treibt dadurch die eine Achse an, das Reibelement des anderen Aktuators befindet sich dann auf dem Umkehrsystem 17 und treibt die andere Achse an. Dieser Aufbau vereinfacht die Konstruktion insoweit, als dass sich keiner der Aktuatoren selbst auf einem bewegten Teil befindet. Dies verringert Kontaktierungsprobleme, da keine bewegten Leitungen verwendet werden müssen. Außerdem wird das Gewicht des Innenrings verringert, auf dem andernfalls zusätzlich der zweite Aktuator sitzen würde. Ein Piezo-Aktuator verfügt über eine hohe Einstellgenauigkeit bei gleichzeitig einer hohen Geschwindigkeit, was die Qualität der Stabilisierung erhöht. Er verfügt weiterhin über eine große Selbsthemmung, so dass auf eine zusätzliche Arretierung verzichtet werden kann. Des Weiteren ist ein Piezo-Linearantrieb sehr effizient, so dass der Stromverbrauch gering ist und so lange Batterielaufzeiten des fernoptischen Geräts 10 erreicht werden können.

Die Stellung des Kardangelenks wird mit einem Hall-Sensor für jede Achse überwacht. Dieser ist ähnlich der entsprechenden Aktuatorik beabstandet von der entsprechenden Schwenkachse, so dass eine Veränderung des Drehwinkels in eine lineare Bewegung umgesetzt wird, die vom Hall-Sensor gemessen wird und von einer Regelungseinrichtung der Aktuatorik 32, 35, 38 eingelesen werden kann.

Mittels des mindestens einen Sensorelements 46 werden die jeweiligen Winkelgeschwindigkeiten um die Hochachse 22 bzw. die Querachse 20 erfasst. Aus den entsprechenden Messsignalen 47 berechnet die Signalverarbeitungseinheit 42 dann im vorliegenden Ausführungsbeispiel einen Soll-Kippwinkel zur Ansteuerung der Aktuatoren 35 der Bildstabilisierungseinrichtung 36 und übermittelt diese über die Leitung 50. Die Regelungseinrichtung des Aktuators 35 verwendet diesen Soll-Kippwinkel als Zielwert eines Regelkreises, der mittels eines für eine entsprechende Rotationsbewegung des Umkehrsystems 17 vorgesehenen Aktuators und eines entsprechenden Hall-Sensors das Umkehrsystem 17 auf diesen Soll-Kippwinkel fährt und dort hält. Dabei handelt es sich um einen Regelkreis, mit dem durch Vergleich des Signals aus dem entsprechenden Hall-Sensor und dem entsprechenden berechneten Soll-Kippwinkel die Geschwindigkeit eines entsprechenden Aktuators gesteuert wird.

Gemäß der voranstehend beschriebenen Ausführungsform befindet sich eine entsprechende Regeleinrichtung in bzw. an dem Aktuator 35, d.h. dies ist Teil der Bildstabilisierungseinrichtung 36. Grundsätzlich kann auch vorgesehen sein, dass eine entsprechende Regelungseinrichtung ein Element der Signalverarbeitungseinheit 42 ist, entsprechend würden sich dann die über die Leitung 50 übertragenen Signale ändern, beispielsweise wäre das Signal der Hall-Sensoren an die Signalverarbeitungseinheit 42 zu übertragen.

Grundsätzlich kann vorgesehen sein, das fernoptische Gerät 10 in einem Montageschritt einer Kalibrierung zu unterziehen, bei der jeder nominal über den Regelkreis eingestellten Verkippung des Umkehrsystems 17 die reale Bildauslenkung gemessen und in dem fernoptischen Gerät hinterlegt wird. Durch diese Kalibrierung kann die Genauigkeit der Bildstabilisierung erhöht werden, da mechanische Toleranzen ausgeglichen werden. In dem Fall, dass das fernoptische Gerät 10 ein binokulares fernoptisches Gerät ist, kann das fernoptische Gerät 10 hier binokular justiert werden.

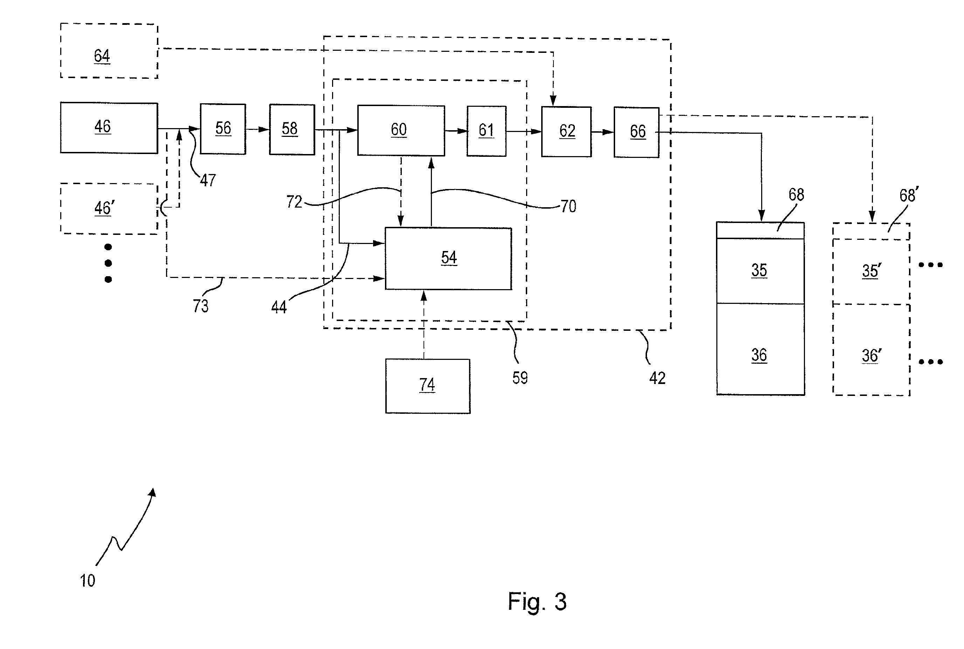

Die Fig. 3 zeigt noch einmal einen beispielhaften Aufbau der Signalverläufe in dem fernoptischen Gerät 10 in einem Blockschaltbild. Mindestens ein Sensorselement 46 ermittelt ein Messsignal 47. Grundsätzlich kann mehr als ein Sensorelement 46 vorgesehen sein, so dass weitere Sensorelemente 46' weitere Messsignale 47' liefern.

Die Messsignale 47 werden in ein Eingangssignal 44 gewandelt, was im Folgenden noch beschrieben wird, und werden dann an in eine Modusdetektionseinheit 54 eingespeist. Die Modusdetektionseinheit 54 dient dabei dazu, zwischen verschiedenen Modi zur Ansteuerung zu unterscheiden und einen Modus zur Ansteuerung festzusetzen.

Zur Filterung des Messsignals 44 können Signalfilter 56 vorgesehen sein. Die Signalfilter 56 können einen oder mehrere Tiefpassfilter enthalten, um hochfrequente Bewegungen, die nicht kompensiert werden müssen, und den hochfrequenten Teil eines Rauschens des Messsignals 47 zu eliminieren. Dazu kann eine Kombination aus einem elektrischen bzw. passiven Tiefpassfilter, einem digitalen Tiefpassfilter und einem digitalen Shelving-Filter in Reihe verwendet werden. Die jeweiligen Filtertypen sind dem Durchschnittsfachmann grundsätzlich bekannt. In dieser Kombination tritt eine Signalverzögerung von lediglich 45° auf. Eine geringere Verzögerung des Messsignals 47 ist notwendig, um eine Bildstabilisierung in Echtzeit zu ermöglichen. Die Tiefpassfilter der Signalfilter 45 erfüllen dabei die Aufgabe, unerwünschtes Rauschen und Störungen zu minimieren als auch eine obere Grenzfrequenz der Bildstabilisierung zu bestimmen. Über die bereits voranstehend beschriebenen Signalfilter 45 und einen Analog-zu-Digital Konverter 58 werden dann die Eingangssignale 44 an die Signalverarbeitungseinheit 42, insbesondere eine zentrale Signalverarbeitung 59 mit der Modusdetektionseinheit 54 und einer Hochpassfilter-Integratoreinheit 60 eingespeist.

Die Modusdetektionseinheit 56 kann auf die Hochpassfilter-Integratoreinheit 60 einwirken, um so die Ansteuerung in jedem Modus zu beeinflussen. Zumindest gibt die Modusdetektionseinheit 54 den aktuellen Modus an die Hochpassfilter-Integratoreinheit 60 aus.

In der beispielhaft ausgeführten Ausführungsform handelt es sich bei den Eingangssignalen 44 um Winkelgeschwindigkeiten, so dass das aufintegrierte Signal ein Winkel ist. Dieser wird von der Integratoreinheit 44 an eine Amplituden-Offset-Einheit 61, die im Folgenden noch detailliert erläutert wird, und von dort an eine Koordinatentransformationseinheit 62 weitergegeben, die den Winkel von dem Koordinatsystem der Sensorelemente 46, 46' in das Koordinatsystem der Bildstabilisierungseinrichtung 36, 36' umsetzt. Im Falle eines binokularen fernoptischen Geräts 10, bei dem der erste Tubus 11 und der zweite Tubus 12 mittels einer Knickbrücke verbunden sind, ist des Weiteren ein Knickbrückensensor 64 vorgesehen, der einen Knickbrückenwinkel ermittelt und an die in der Signalverarbeitungseinheit 42 vorgesehene Koordinatentransformationseinheit 62 übermittelt, so dass bei der Koordinatentransformation auch der Knickbrückenwinkel berücksichtigt wird. Grundsätzlich kann die Koordinatentransformationseinheit 62 auch im Signalfluss vor der Integratoreinheit 44 angeordnet sein. Des Weiteren ist schematisch eine Sollsignalerzeugungseinheit 66 dargestellt, diese kann die aufintegrierten Soll-Winkelsignale insbesondere wieder in analoge Signale rückwandeln und gibt dann an eine entsprechende Bildstabilisierungseinrichtung 36, 36' das passende Soll-Winkelsignal aus. Die Bildstabilisierungseinrichtung kann sich dabei beispielsweise in dem ersten Tubus 11 befinden. Falls ein zweiter Tubus 12 vorgesehen ist, kann auch eine in dem zweiten Tubus 12 angeordnete Bildstabilisierungseinheit 36' entsprechend angesteuert werden. Dazu kommuniziert die Signalverarbeitungseinheit 42 mit einer entsprechenden Regelungseinrichtung 68, 68' der jeweiligen Bildstabilisierungseinrichtung 36, 36', die die entsprechenden Aktuatoren 35, 35' regelt. Es kann auch vorgesehen sein, dass die Regelungseinrichtungen 68, 68' ebenfalls in der Signalverarbeitungseinheit 42 vorgesehen sind, in diesem Fall fließen von den Bildstabilisierungseinrichtungen 36, 36' entsprechende Positionsdaten zurück an die Signalverarbeitungseinheit 42.

Die Modusdetektionseinheit 54 ist mit der Hochpassfilter-Integratoreinheit 60 verbunden und kann mit dieser kommunizieren. Dabei wird über eine Signalleitung 70 insbesondere der von der Modusdetektionseinheit 54 bestimmte Modus an die Hochpassfilter-Integratoreinheit 60 weitergegeben, um eine Ansteuerung der Bildstabilisierungseinrichtungen 36, 36' in einem bestimmten Modus erfolgen zu lassen. Welcher Art die mittels der Signalleitung 70 übertragenen Daten sind, kann unterschiedlich ausgeführt sein. Es kann beispielsweise nur der Modus übermittelt werden, es kann aber auch vorgesehen sein, dass bereits bestimmte, in der Hochpassfilter-Integratoreinheit 60 vorgesehene beeinflussbare Größen bzw. Parameter übermittelt werden. Des Weiteren kann vorgesehen sein, dass auch die Hochpassfilter-Integratoreinheit 60 Signale an die Modusdetektionseinheit 54 mittels einer Signalleitung 72 übertragen kann. Dies kann beispielsweise der gegenwärtig in der Hochpassfilter-Integratoreinheit 60 angewendete Modus sein. Darüber hinaus kann beispielsweise in dem Fall, dass das Messsignal 47 bzw. das Eingangssignal 44 eine Beschleunigung bzw. Winkelbeschleunigung ist, ein einmal zu einer Geschwindigkeit bzw. Winkelgeschwindigkeit integriertes Signal an die Modusdetektionseinheit 54 übermittelt werden, so dass auch in dem Fall, dass das Messsignal 47 bzw. das Eingangssignal 44 eine Beschleunigung bzw. eine Winkelbeschleunigung ist, eine Bestimmung des Modus bzw. einer Bewegungssituation anhand eines Geschwindigkeitssignals bzw. Winkelgeschwindigkeitssignals erfolgen kann.

Grundsätzlich ist vorgesehen, dass die Bestimmung der Bewegungssituation und damit des Modus anhand des Eingangssignals 44 erfolgt, das bereits den Signalfilter 56 und den Analog/Digital-Konverter 58 durchlaufen hat. Es kann in einer Ausgestaltung aber auch vorgesehen sein, dass mittels einer Signalleitung 73 das ungefilterte Messsignal 47 verwendet wird. In der Signalleitung 73 kann auch ein Analog/Digital-Konverter (nicht dargestellt) angeordnet sein, um das Signal entsprechend umzusetzen.

Des Weiteren kann eine Schnittstelleneinrichtung 74 vorgesehen sein. Bei der Schnittstelleneinrichtung kann es sich etwa um einen mechanischen Stellhebel bzw. ein mechanisches Stellelement handeln, es kann aber auch eine softwarebasierte Eingabemöglichkeit, beispielsweise mittels eines Touchscreens vorgesehen sein. Mittels der Schnittstelleneinrichtung 74 kann ein Nutzer einen gewünschten Anwendungsfall in der Signalverarbeitungseinheit 42 eingeben. In einer Ausführungsform kann vorgesehen sein, dass eine Eingabe mittels der Schnittstelleneinrichtung 74 Vorrang vor einem mittels der Modusdetektionseinheit 54 ermittelten Anwendungsfall hat.

Insbesondere ist die Modusdetektionseinheit 56 dazu in der Lage, zwischen einem Bildstabilisierungsmodus und einem Schwenkmodus zu unterscheiden. Dieses geschieht anhand einer Auswertung des Eingangssignals 44. Als Alternative wäre auch denkbar, direkt das Messsignal 47 über eine Leitung 73 in die Modusdetektionseinheit 54 einzugeben und die Auswertung anhand des Messsignals 47 durchzuführen. Insbesondere erfolgt eine wahrscheinlichkeitsbasierte Bestimmung des Schwenkmodus wie im Folgenden noch beschrieben wird. Die Bestimmung eines Schwenkmodus kann unabhängig für die Hochachse 22 und für die Querachse 20 erfolgen, d.h. unabhängig für jedes Messsignal 47, 47', aus denen sich das Eingangssignal 44 zusammensetzt. In der schematischen Darstellung sind die Messsignale 47, 47' serieller Art auf einem Bus dargestellt, grundsätzlich ist auch eine parallele Verarbeitung möglich.

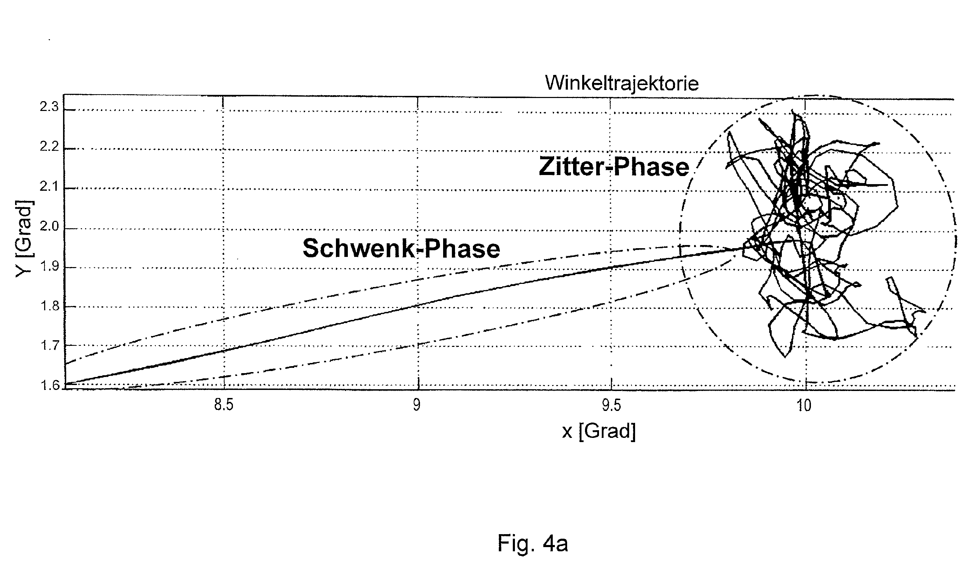

Die Fig. 4a zeigt beispielhaft den Verlauf einer Winkeltrajektorie, wie er bei der Benutzung des fernoptischen Geräts 10 auftreten kann. Die Bildstabilisierung des fernoptischen Geräts 10 erfolgt dabei um seine Hochachse 22 und seine Querachse 20. Eine Nickbewegung 26 ist in Form eines Winkels x aufgetragen, eine Gierbewegung 28 ist in Form eines Winkels y aufgetragen. Die Winkeltrajektorie ergibt sich nun, wenn man die Winkel x und y paarweise nach ihrem zeitlichen Verlauf aufträgt. Der Verlauf der Winkeltrajektorie zeigt deutlich zwei verschiedene Bewegungssituationen. Als "Schwenkphase" ist eine erste Bewegungssituation gekennzeichnet, in der der Benutzer eine gewollte Bewegung mit dem fernoptischen Gerät 10 vollführt. Diese Bewegungssituation ist gekennzeichnet durch einen gleichförmigen, nahezu linearen Bewegungsverlauf. Demgegenüber ist eine zweite Bewegungssituation, eine "Zitter-Phase", zu erkennen. Während dieser Bewegungssituation versucht der Benutzer, das fernoptische Gerät 10 im Wesentlichen in einer bestimmten Ausrichtung zu halten, um ein Objekt zu beobachten. Während dieser Bewegungssituation treten jedoch Zitterbewegungen des Benutzers auf. Unter Umständen können diese Bewegungen auch von einem Untergrund herrühren, auf dem der Benutzer steht. Die Winkeltrajektorie bewegt sich dabei anhand der Zitterbewegungen nahezu willkürlich um einen Mittelpunkt herum, der als die von dem Nutzer gewollte Ausrichtung des fernoptischen Geräts angenommen werden kann. Wie in der Fig. 4a zu erkennen ist, lassen sich diese verschiedenen Bewegungssituationen bei einer Betrachtung einer Trajektorie bzw. dem dargelegten Ausführungsbeispiel einer Winkeltrajektorie gut voneinander unterscheiden.

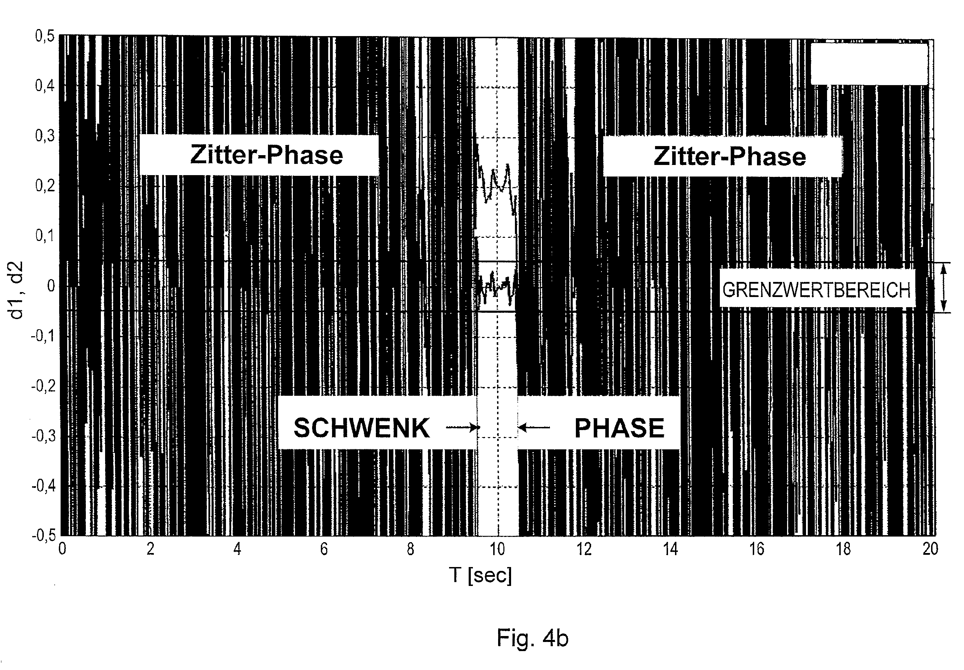

Fig. 4b zeigt eine schematische Darstellung des zeitlichen Verlaufs einer ersten räumlichen Ableitung

$$\frac{dy}{dx}$$ und einer zweiten räumlichen Ableitung $$\frac{d^2y}{dx^2}.$$

Gekennzeichnet sind in der Fig. 4b wiederum eine Zitter-Phase und eine SchwenkPhase. Wie zu erkennen ist, ist während einer Zitter-Phase ein Verlauf sowohl der ersten als auch der zweiten Ableitung nahezu nicht nachvollziehbar. Aufgrund ständiger willkürlicher Richtungsänderungen während der Zitter-Phase ergibt sich hier für das Signal der ersten Ortsableitung als auch der zweiten Ortsableitung ein hochfrequentes Signal mit hoher Amplitude. Zu erkennen ist aber auch, dass während der der gewollten Schwenkphase sowohl die erste Ableitung als auch die zweite Ableitung einen eher niederfrequenten Verlauf von deutlich geringerer Amplitude aufweisen. Die erste Ortsableitung schwingt dabei etwa um einen Wert von 0,2° pro Sekunde, die zweite Ableitung schwingt etwa um den Wert 0. Anhand der Verläufe lässt sich aber das Vorliegen einer bestimmten Bewegungssituation präzise und schnell bestimmen.

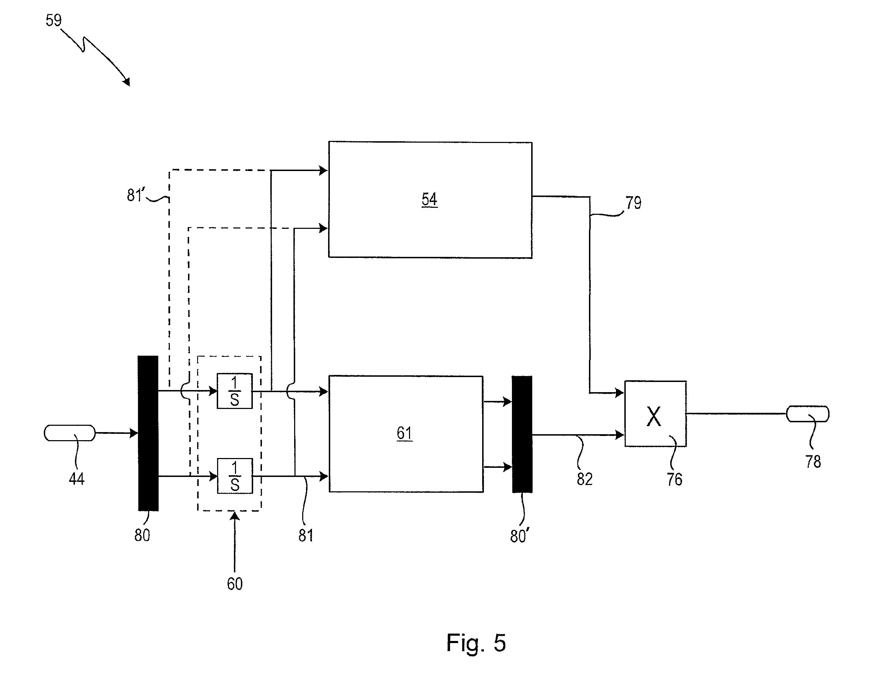

Fig. 5 zeigt eine mögliche Ausführungsform einer zentralen Signalverarbeitung 59 in der Signalverarbeitungseinheit 42. Eingegeben wird das Eingangssignal 44. Dieses Eingangssignal wird in der Amplituden-Offset-Einheit 61 verarbeitet. Des Weiteren erfolgt in der Modusdetektionseinheit 54 eine Bestimmung der vorliegenden Bewegungssituation und des zugeordneten Modus zur Ansteuerung der Bildstabilisierungseinrichtung 36, 36'. Entsprechend erfolgt in einer Multiplikationseinheit 76 eine Multiplikation zur Erzeugung eines Ausgangssignals 78, das an die Koordinatentransformationseinheit 62 übergeben wird. Im Folgenden wird nun beschrieben, welche Signale in der Multiplikationseinheit 76 eingegeben werden.

Das Eingangssignal 44 weist in der dargestellten Ausführungsform durch die Sensorelemente 46, 46' ermittelte Winkelbeschleunigungen sowohl der Nickbewegung 26 als auch der Gierbewegung 28 auf. In einer Einheit 80 werden diese bisher seriell verarbeiteten Signale für eine parallele Signalverarbeitung aufgeteilt. Dies ist jedoch lediglich beispielhaft zu verstehen, grundsätzlich kann eine Signalverarbeitung auch seriell erfolgen. Die Winkelbeschleunigungen werden in der Integratoreinheit 60, die in der dargestellten Ausführungsform keine weiteren Elemente zur Bereitstellung einer Hochpassfilterung aufweist, integriert. Auf diese Weise werden Positionssignale 81, die im vorliegenden Fall Winkelsignale 81 sind, ermittelt. Die Winkelsignale 81 werden in die Amplituden-Offset-Einheit 61 eingegeben. Des Weiteren werden die Winkelsignale 81 in die Modusdetektionseinheit 54 eingegeben.

Wie im Folgenden noch gezeigt wird, wird in der Modusdetektionseinheit 54 das Winkelsignal 81 zunächst differenziert. Grundsätzlich ist es daher möglich, auch direkt die Winkelbeschleunigungen 81' in der Modusdetektionseinheit 54 einzugeben. Nach der Amplituden-Offset-Einheit 61 werden die Winkelsignale 81 wieder zu einer seriellen Verarbeitung in der Einheit 80' zusammengeführt. Das nun anliegende Signal 82 ist bereits um einen eventuellen Amplitudenversatz korrigiert und auf eine Maximalamplitude zur Ansteuerung der Bildstabilisierungseinrichtung 36 beschränkt. Dieses beschränkte Signal 82 wird dann in der Multiplikationseinheit 76 mit dem Ausgangssignal 79 der Modusdetektionseinheit 54 multipliziert. Das Ausgangssignal 79 ist ein Resetsignal und hat entweder den Wert 0 oder den Wert 1. Die vorliegende zentrale Signalverarbeitung 59 ist dadurch in der Lage, die Bildstabilisierungseinrichtung 36, 36' in zwei verschiedenen Modi anzusteuern, wobei einem ersten Modus eine Bewegungssituation "gewollte Bewegung" bzw. "Verschwenken" zugeordnet ist und einem zweiten Modus eine Bewegungssituation "ungewollte Bewegung" bzw. "Zitterdrehbewegungen" zugeordnet ist. In dem ersten Modus ist das Winkelsignal 79 ein Wert 0, so dass als Ausgangssignal 78 ein Wert 0 ausgegeben wird. Während eines Verschwenkens wird die Bildstabilisierungseinrichtung 36, 36' daher in ihre Grundstellung in einer Winkelauslenkung von 0° geführt. In dem zweiten Modus hat das Ausgangssignal 79 einen Wert 1, so dass das an die Koordinatentransformationseinheit 62 übergebene Signal 78 dem beschränkten Signal 82 entspricht. Im Folgenden wird nun auf die genaue Ausgestaltung der Modusdetektionseinheit 54 und die Amplituden-Offset-Einheit 61 eingegangen.

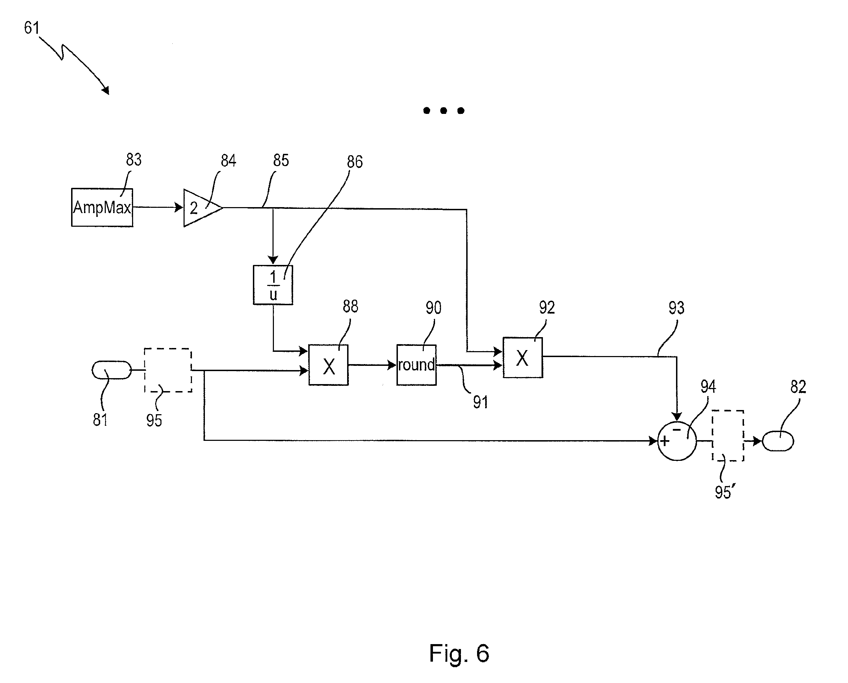

Fig. 6 zeigt eine Ausgestaltung der Amplituden-Offset-Einheit 61. Das Winkelsignal 81 wird in die Amplituden-Offset-Einheit 61 eingegeben. Dargestellt ist beispielhaft lediglich die Verarbeitung eines einzigen Winkelsignals 81. Im Fall der Eingabe zweier Winkelsignale, wie es in Fig. 5 dargestellt ist, findet eine entsprechende parallele Verarbeitung beider Winkelsignale 81 statt, wobei die Verarbeitung der weiteren Winkelsignale 81 der in der Fig. 6 dargestellten Verarbeitung entspricht.

Wenn im Rahmen dieser Anmeldung von einem "Block" gesprochen wird, kann darunter auch eine "Einheit" als Element der Signalverarbeitungseinheit 42 verstanden werden. Entsprechend kann ein "Block" bzw. eine "Einheit" auch als "Schritt" eines entsprechenden Verfahrens aufgefasst werden.

Neben dem Winkelsignal 81 ist eine Maximalamplitude 83 festgesetzt, auf die das Winkelsignal 81 beschränkt werden soll. Die Maximalamplitude 83 wird in einer Einheit 84 verdoppelt, so dass ein Signal 85 der doppelten Maximalamplitude 83 entspricht. Vor dem Signal 85 wird der reziproke Wert in einer Signaloperation 86 gebildet und der entsprechende reziproke Wert in einer Multiplikationseinheit 88 mit dem Winkelsignal 81 multipliziert. Anstatt der Signaloperation 86 und der Multiplikation 88 kann entsprechend auch vorgesehen sein, dass in dem Schritt bzw. der Einheit 88 das Winkelsignal 81 durch die doppelte Maximalamplitude 85 geteilt wird.

Anschließend wird das durch die Multiplikationseinheit 88 erzeugte Signal in einer Rundungsoperation 90 auf ein Signal 91 gerundet, das der nächstliegenden ganzen Zahl entspricht. Die Rundung innerhalb der Rundungsoperation 90 erfolgt dabei in bekannter Form, wobei nach einer ersten Nachkommastelle gerundet wird. Ein Wert X,5 stellt die Rundungsgrenze dar. Ein Wert größer oder gleich X,5 wird auf die nächsthöhere ganze Zahl aufgerundet, darunter wird auf die nächsttiefere ganze Zahl abgerundet. Diese nächstliegende ganze Zahl 91 wird dann in einer Multiplikationseinheit 92 mit der doppelten Maximalamplitude 85 multipliziert und so ein Subtraktionswert 93 erzeugt. In einem Summationsblock 94 wird der Subtraktionswert 93 dann von dem Winkelsignal 81 subtrahiert und so das beschränkte Signal 82 erzeugt.

Mittels der dargestellten Amplituden-Offset-Einheit ist man dazu in der Lage, ohne Zeitverzögerung ein Winkelsignal 81 auf eine Maximalamplitude 83 zu beschränken und zudem einen eventuell vorhandenen Amplituden-Offset zu eliminieren. Insbesondere ist man dazu in der Lage, eine Zitterdrehbewegung, die ein hochfrequentes Signal ist, von einer möglichen langsamen Schwenkbewegung, die ein sehr niederfrequentes Signal ist, zu trennen. Die dargestellte Signalverarbeitung ermöglicht eine verzögerungsfreie, im Signalverlauf vorwärts gerichtete Trennung der Zitterdrehbewegungen, die hohe Frequenzen und kleine Amplituden aufweisen, von niederfrequenten Schwenkbewegungen. Entsprechend enthält das Ausgangssignal 82 nur noch die Zitterdrehbewegungen, die so von der Bildstabilisierungseinrichtung 36, 36' nachgeführt werden können. Die dargestellte Verschaltung funktioniert bis zu einer Maximalamplitude von 1,0. Entsprechend können Skalierungsfaktoren 95, 95' vorgesehen sein. Anhand dieser Skalierungsfaktoren 95 und 95' wird das Winkelsignal 81 zunächst durch den Skalierungsfaktor in einer Signaloperation 95 geteilt. Ein Ausgangswert des Additionsblocks 94 wird dann entsprechend um denselben Skalierungsfaktor in einer Signaloperation 95' mit dem Skalierungsfaktor multipliziert. Auf diese Weise lassen sich auch größere Maximalamplituden behandeln und das Regelsignal 81 entsprechend beschränken. Soll beispielsweise die Maximalamplitude 2,0 betragen, wäre entsprechend der Skalierungsfaktor in den Signaloperationen 95, 95' mit 2 zu wählen.

Die Skalierungsfaktoren 95 und 95' können für jedes Winkelsignal 81 separat festgelegt werden. Insbesondere hat sich gezeigt, dass eine gute Verarbeitung der Winkelsignale 81 erfolgen kann, wenn die Maximalamplitude 83 zu einem Wert von 0,5 festgelegt werden kann. Entsprechend sind hierzu die jeweiligen Winkelsignale 81 derart mittels der Skalierungsfaktoren 95, 95' zu skalieren, dass eine relative Amplitude bzw. die Amplitude der hochfrequenten Anteile der Winkelsignale 81 kleiner als 0,5 ist. Die Größe der Skalierungsfaktoren 95, 95' muss hierfür bekannt sein. Dazu kann vorgesehen sein, dass die entsprechenden Skalierungsfaktoren 95, 95' mittels vorab durchgeführter Versuche allgemein oder jeweils für einen bestimmten Anwendungsfall ermittelt werden. Beispielsweise können Messungen durchgeführt werden, während Versuchspersonen das fernoptische Gerät 10 in typischer Weise benutzen. So können typische Signalverläufe der Winkelsignale 81 ermittelt und entsprechende Skalierungsfaktoren 95, 95' festgelegt werden.

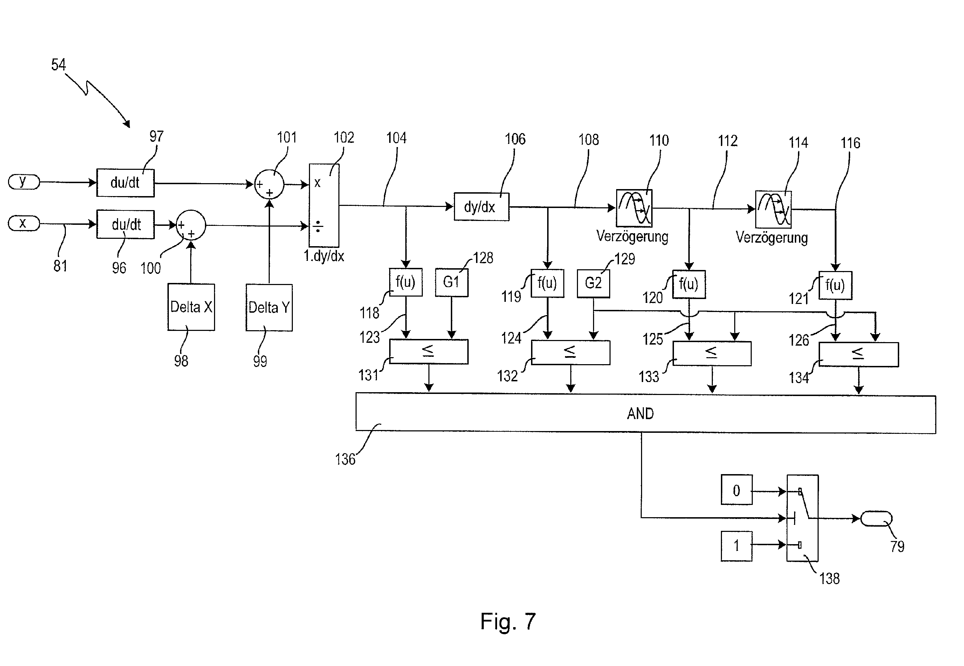

Fig. 7 zeigt eine Ausgestaltung der Modusdetektionseinheit 54. In der Modusdetektionseinheit 54 werden Winkelsignale 81 eingegeben, wie es in Fig. 5 dargestellt ist. Die Winkelsignale 81 werden zunächst in Differentiationsoperationen 96, 97 differenziert. Werden direkt Winkelgeschwindigkeiten 81' in die Modusdetektionseinheit 54 eingegeben, wie es in Fig. 5 mit dem Bezugszeichen 81' schematisch angedeutet ist, fallen die Differentiationsoperationen 96, 97 entsprechend weg. Die differenzierten Signale werden mit Konstanten 98, 99 beaufschlagt. Die Konstanten 98, 99 werden in Additionsblöcken 100, 101 auf die differenzierten Signale addiert. Anschließend wird in einem Block 102 ein erstes differenziertes Winkelsignal durch das zweite differenzierte Winkelsignal dividiert, um eine entsprechende räumliche Ableitung bzw. Ortsableitung $\dfrac{dy}{dx}$ zu erzeugen. Selbstverständlich kann auch eine entsprechende andere räumliche Ableitung bzw. Ortsableitung $\dfrac{dx}{dy}$ erzeugt werden. dy Die Beaufschlagung mit den Konstanten 98, 99 erfolgt, damit die Division im Block 102 ausgeführt werden kann und nicht eine Division durch Null oder einen sehr kleinen Wert erfolgt, was wiederum zu einem extrem großen und nur schwer zu behandelnden Wert einer räumlichen Ableitung führen würde. Die Konstante 98 kann beispielsweise einen Wert von 0,1 haben. Die Konstante 99 kann beispielsweise einen Wert von 0,001 haben.

Die erste räumliche Ableitung bzw. die erste Ortsableitung bildet einen ersten Ortsableitungswert 104 wird dann in einem Block 106 ein weiteres Mal differenziert, so dass sich hieraus die zweite Ortsableitung bzw. die zweite räumliche Ableitung ergibt, die einen zweiten Ortsableitungswert 108 bildet. In einem Block 110 wird dieses Signal 108 um einen gewissen Zeitraum verzögert, so dass der Ortsableitungswert 112 dem Ortsableitungswert 108 zu einem früheren Zeitpunkt entspricht. Einem Block 114 wird der Ortsableitungswert 112 erneut verzögert, so dass der Ortsableitungswert 116 dem Ortsableitungswert 112 zu einem früheren Zeitpunkt bzw. dem Ortsableitungswert 108 zu einem noch früheren Zeitpunkt entspricht.

Der Ortsableitungswert 104 wird dann einer Funktionsoperation 118, der Ortsableitungswert 108 einer Funktionsoperation 119, der Ortsableitungswert 112 einer Funktionsoperation 120 und der Ortsableitungswert 116 einer Funktionsoperation 121 unterzogen. Die Funktionsoperationen 118, 119, 120 und 121 können im dargestellten Beispiel etwa die Bildung der Betragsnorm eines entsprechenden Signals 104, 108, 112 und 116 sein. Grundsätzlich ist es jedoch auch möglich, dass in den Funktionsoperationen 118, 119, 120 und 121 p-Normen oder aber auch Mittelwerte gebildet werden.

Mittels der Funktionsoperatoren 118, 119, 120, 121 werden so aus den Ortsableitungswerten 104, 108, 112 und 116 Vergleichswerte 123, 124, 125, 126 gebildet. Die Vergleichswerte 123, 124, 125, 126 werden dann mit Grenzwerten 128, 129 verglichen. Grundsätzlich kann für jeden Vergleich ein eigener Grenzwert 128, 129 festgelegt sein. In der dargestellten Ausführungsform ist für den Vergleich des Vergleichswerts 123 ein erster Grenzwert 128 vorgesehen und es erfolgt ein Vergleich mittels eines Vergleichsoperators 131. Für die Vergleichswerte 124, 125, 126 ist ein zweiter Grenzwert 129 vorgesehen und es erfolgt ein entsprechender Vergleich einer der Vergleichsoperatoren 132, 133, 134.

Die dargestellte Ausführungsform mit der Bildung von vier Vergleichswerten 123, 124, 125, 126 und die Art der Ortsableitungswerte 104, 108, 112, 116 ist lediglich beispielhaft zu verstehen, grundsätzlich genügt es, wenn mindestens ein Vergleichswert 123, 124, 125, 126 gebildet wird. Die dargestellte Ausführungsform ermöglicht es jedoch besonders präzise, eine bestimmte Bewegungssituation, im vorliegenden Fall eine gewollte Bewegung bzw. ein Verschwenken des fernoptischen Geräts 10 zu detektieren.

An die Vergleichsoperationen 131, 132, 133, 134 schließt sich ein Logikgatter 136 an, das die Ergebnisse der Vergleichsoperation 131, 132, 133, 134 logisch verknüpft. In der dargestellten Ausführungsform ist das Logikgatter 136 als einfaches AND-Gatter ausgebildet. Das Logikgatter 136 liefert somit eine wahre Aussage, wenn jede der Vergleichsoperationen 131, 132, 133, 134 eine wahre Aussage ergibt. Vorliegend ist das der Fall, wenn sowohl die erste Ortsableitung als auch die zweite Ortsableitung und die entsprechenden verzögerten Signale der zweiten Ortsableitung unterhalb oder gleich der gesetzten Grenzwerte 128, 129 sind. Wie mit Blick auf die Fig. 4 erläutert ist, sind die Beträge der Ortsableitungen bei einer gewollten Bewegung bzw. bei einem Schwenk gering verglichen mit dem Zustand während einer ungewollten Bewegung bzw. einer Zitterbewegung. Der erste Grenzwert 128 kann bspw. auf 0,7 in der Einheit (Grad/s) festgesetzt sein, der zweite Grenzwert 129 kann bspw. auf 6 in der Einheit (Grad/s$^2$) festgesetzt sein.

Grundsätzlich können natürlich auch andere Werte für die Grenzwerte 128, 129 festgesetzt werden. Beispielsweise können die Grenzwerte durch Messungen an dem fernoptischen Gerät 10 vorab kalibriert werden. Auch hier können Messungen durchgeführt werden, während Versuchspersonen das fernoptische Gerät 10 in typischer Weise benutzen. Insbesondere kann etwa der Grenzwert 128 in einem Bereich von 0,6 bis 0,8 liegen, insbesondere also etwa 0,6, 0,65, 0,75 oder 0,8 betragen. Insbesondere kann etwa der Grenzwert 129 in einem Bereich von 5 bis 7 liegen, insbesondere also etwa 5, 5,5, 6,5 oder 7 betragen.

Letztlich ist ein Schalter 138 vorgesehen, der entsprechend der Aussage des Logikgatters 136 einen Wert 0 oder 1 schaltet. Ist die Aussage des Logikgatters 136 wahr, das heißt, liegt eine gewollte Bewegung bzw. ein Verschwenken vor, ist das Ausgangssignal 79 der Wert 0, ist die Aussage unwahr, ist das Ausgangssignals 79 der Wert 1.

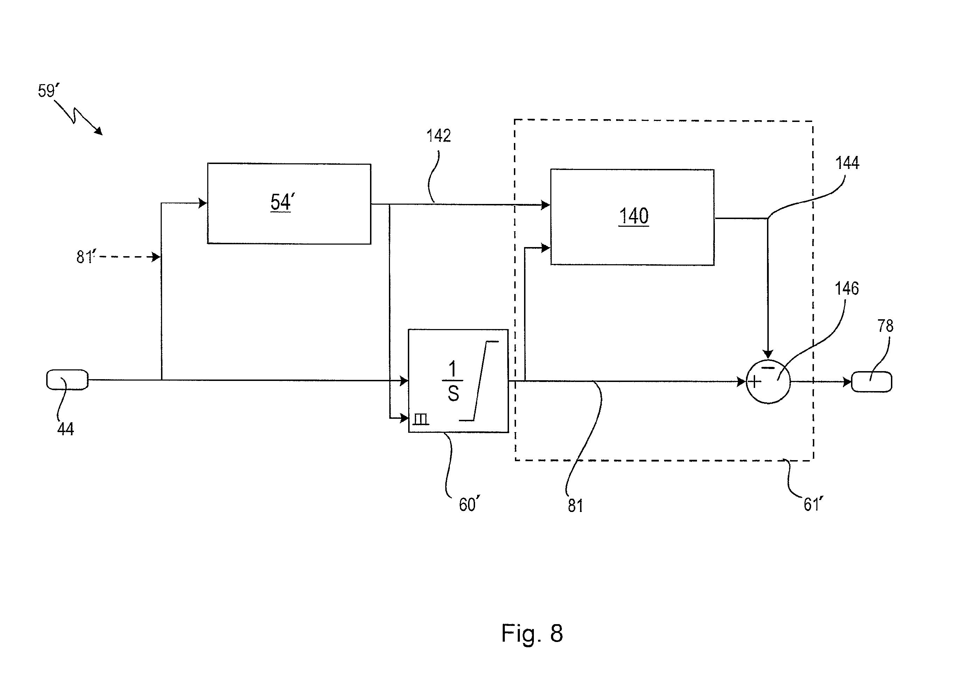

Die Fig. 8 zeigt eine weitere mögliche Ausgestaltung der zentralen Signalverarbeitung 59'. Grundsätzlich weist diese Ausgestaltung ebenfalls eine weitere Ausgestaltung einer Modusdetektionseinheit 54', eine weitere Ausgestaltung einer Integratoreinheit 60' und eine weitere Einheit 61' auf, die eine Amplituden-Offset-Einheit 61' bildet. Die in der Fig. 8 dargestellten Einheiten der zentralen Signalverarbeitung 59' sind mit den in der Fig. 5 dargestellten Einheiten der Signalzentralverarbeitung 59 grundsätzlich kombinierbar. Beispielsweise kann die Modusdetektionseinheit 54' auch in der zentralen Signalverarbeitung 59 eingesetzt werden bzw. die Modusdetektionseinheit 54 in der in der Fig. 8 dargestellten zentralen Signalverarbeitung 59'.

In der in Fig. 8 dargestellten Ausgestaltung wird das Eingangssignal 44, das in der Form von von Sensorelementen 46, 46' ausgegebenen Winkelgeschwindigkeiten vorliegt, an die Integratoreinheit 60' und an die Modusdetektionseinheit 54' eingegeben. In die Modusdetektionseinheit 54' geht somit nicht ein Positionssignal in Form einer Winkelauslenkung ein, sondern das Eingangssignal 44, das in der Form einer ersten Ableitung nach der Zeit des Positionssignals bzw. des Winkelsignals vorliegt, somit entspricht es dem in der Fig. 5 dargestellten Signal 81'.

Die Amplituden-Offset-Einheit 61' weist eine Einheit zur Mittelwertbildung bzw. eine Mittelwertbildungseinheit 140 auf. In die Mittelwertbildungseinheit 140 geht das von der Integratoreinheit 60' ausgehende Positionssignal 81 ein sowie ein von der Modusdetektionseinheit 54' ermitteltes Resetsignal 142. Das Resetsignal 142 geht des Weiteren auch in die Integratoreinheit 60' ein. Das Resetsignal ist insbesondere ein boolsches Signal, das den Wert 1 oder den Wert 0 annimmt. Die Modusdetektionseinheit 54' unterscheidet somit ebenfalls zwischen genau zwei Modi. Dabei ist dem ersten Modus eine Bewegungssituation zugeordnet, die einer gewollten Bewegung bzw. einer Schwenkbewegung entspricht, und einem zweiten Modus eine Bewegungssituation zugeordnet, die einer ungewollten Bewegung bzw. einer Zitterdrehbewegung entspricht.

Das Resetsignal 142 ist derart gebildet, dass während des Vorliegens eines Schwenkvorgangs das Signal wahr ist und somit einen Reset bzw. ein Zurücksetzen der Integratoreinheit 60' auslöst. Das von der Integratoreinheit 60' während eines gewollten Schwenkvorgangs ausgehende Positionssignal 81 ist dann somit wieder Null. Auch zum Ende eines Schwenkvorgangs und bei einem erneuten Wechsel in den zweiten Modus, in dem die Zitterdrehbewegungen kompensiert werden, ist das Positionssignal 81 somit zunächst Null. Während eines gewollten Schwenkvorgangs wird eine Bildstabilisierungseinrichtung 36, 36' somit zurück in ihre Grundstellung geführt, so dass zum einen während einer gewollten Schwenkbewegung keine Bildstabilisierung erfolgt und zum anderen durch die gewollte Schwenkbewegung kein Amplitudenversatz erzeugt werden kann.

Es muss somit lediglich noch eine eventuelle langsame Schwenkbewegung behandelt werden, die von der Modusdetektionseinheit 54' nicht erkannt wird, da sie sehr langsam und unter fortgeführten Zitterdrehbewegungen erfolgt und somit nicht detektiert werden kann. Dies erfolgt entsprechend in der Amplituden-Offset-Einheit 61', wie im Folgenden noch erläutert wird. Dabei wird von der Mittelwertbestimmungseinheit 140 ein Mittelwert der Winkelauslenkungen über einen bestimmten vergangenen Zeitraum ermittelt, von dem ausgegangen wird, dass dieser die von einem Nutzer gewünschte Lage des fernoptischen Geräts 10 wiedergibt. Dieser Mittelwert wird als ein Mittelwertsignal 144 ausgegeben, das dann in einer Subtraktionseinheit 146 von dem Positionssignal 81 subtrahiert wird. Auf diese Weise wird es möglich, eine langsame und sehr niederfrequente Bewegung bzw. Winkelauslenkung des fernoptischen Geräts 10 aus dem Positionssignal 81 herauszufiltern. Das Ausgangssignal 78, das an die Koordinatentransformationseinheit 62 übermittelt wird, weist dann lediglich nur noch die hochfrequenten Zitterdrehbewegungsanteile auf, die im Wesentlichen um die Nulllage herum schwingen.

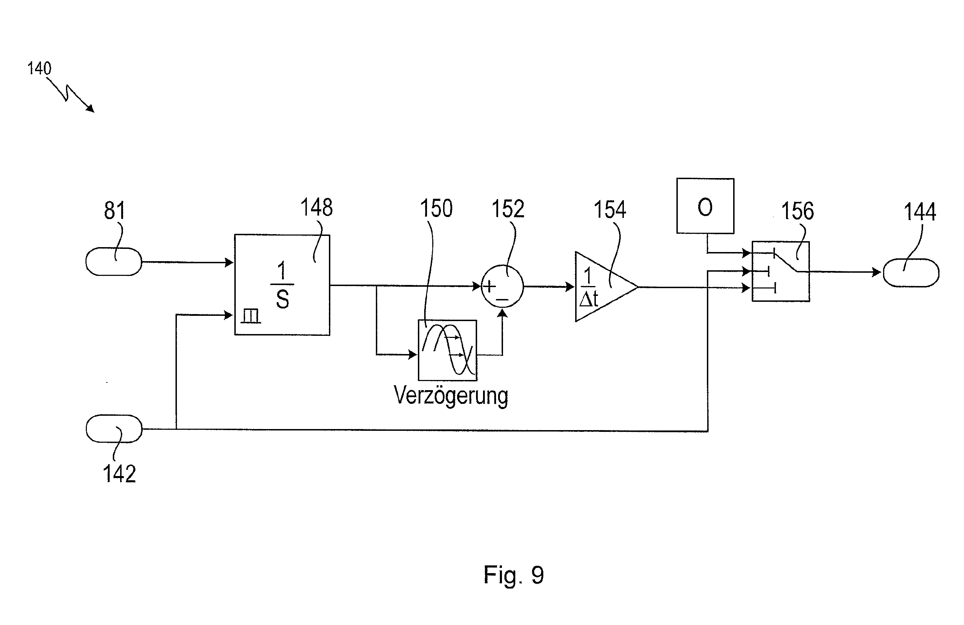

In Fig. 9 ist eine Ausgestaltung der Mittelwertbestimmungseinheit 140 dargestellt. Eingegeben werden das Positionssignal 81, das in der Form einer Winkelauslenkung vorliegt, und das Resetsignal 142. Das Winkelsignal 81 wird in einer Integratoreinheit 148 zunächst aufintegriert, wobei das Resetsignal ein Zurücksetzen der Integratoreinheit 148 auf Null während eines Schwenkvorgangs, das heißt in dem ersten Modus, bewirkt. Ein Ausgangssignal der Integratoreinheit 148 wird in einem Verzögerungsglied 150 um einen bestimmten Zeitraum verzögert. Dieser bestimmte Zeitraum wird fest vorgegeben. In einem Block 152 wird dann das Ausgangssignal der Integratoreinheit 148 um dieses verzögerte Signal verringert. Der Block 152 gibt daher quasi nur noch das über den bestimmten Zeitraum aufintegrierte Signal des Winkelsignals 81 aus. Dieser Wert wird in einem Block 154 entsprechend durch die Dauer des bestimmten Zeitraums geteilt, so dass der Ausgang des Blocks 154 der zeitliche Mittelwert über dem bestimmten Zeitraum des Winkelsignals 81 ist. Dieser Wert geht in einen Schalter 156 ein, der ebenfalls von dem Resetsignal 142 geschaltet wird. Während des Schwenkvorgangs gibt der Schalter den Wert Null aus, so dass der Mittelwert 144 Null ist. Sonst wird der von dem Block 154 ausgegebene Wert ausgegeben, das heißt während des zweiten Modus, in dem eine Kompensation von Zitterdrehbewegungen erfolgt.

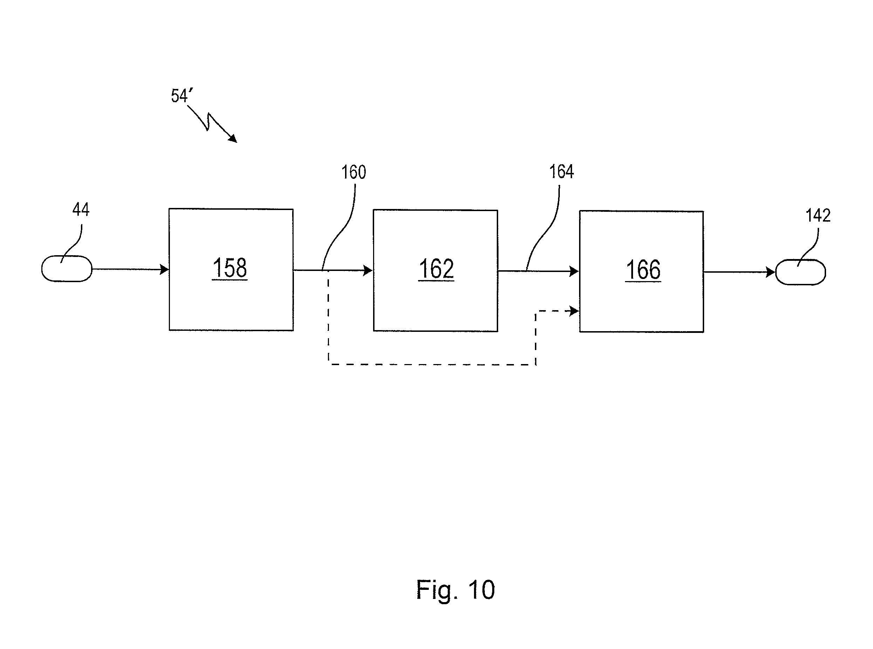

Fig. 10 zeigt schematisch einen Aufbau der Modusdetektionseinheit 54'. In die Modusdetektionseinheit 54' geht das Eingangssignal 44 ein, das bereits in der Form von ersten zeitlichen Ableitungen des Winkelsignals bzw. in der Form von Winkelgeschwindigkeiten vorliegt. Der Aufbau der Ausgestaltung der Modusdetektionseinheit 54' wird der Übersicht halber in drei Stufen geschildert. Zunächst wird in einem Block 158 ein Minimum von Ortsableitungen gebildet, und ein entsprechendes Ausgangssignal 160 wird einem Block 162 übergeben. Block 162 bildet eine p-Norm des Minimumsignals 160 und gibt entsprechend ein Normsignal 164 an einen Vergleichsblock 166 aus. Aus dem Vergleichsblock 166 geht ein entsprechendes Resetsignal 142 aus. Des Weiteren kann insbesondere vorgesehen sein, dass das Minimumsignal 160 auch in den Vergleichsblock 166 eingegeben wird. Die einzelnen Blöcke der Modusdetektionseinheit 54' sind wiederum in entsprechenden Signalverarbeitungsstrecken der in Fig. 7 dargestellten Modusdetektionseinheit 54 austauschbar, so bspw. der Vergleichsblock 166 oder der Block 158 zu einer Minimumbildung, wie im Folgenden noch erläutert wird.

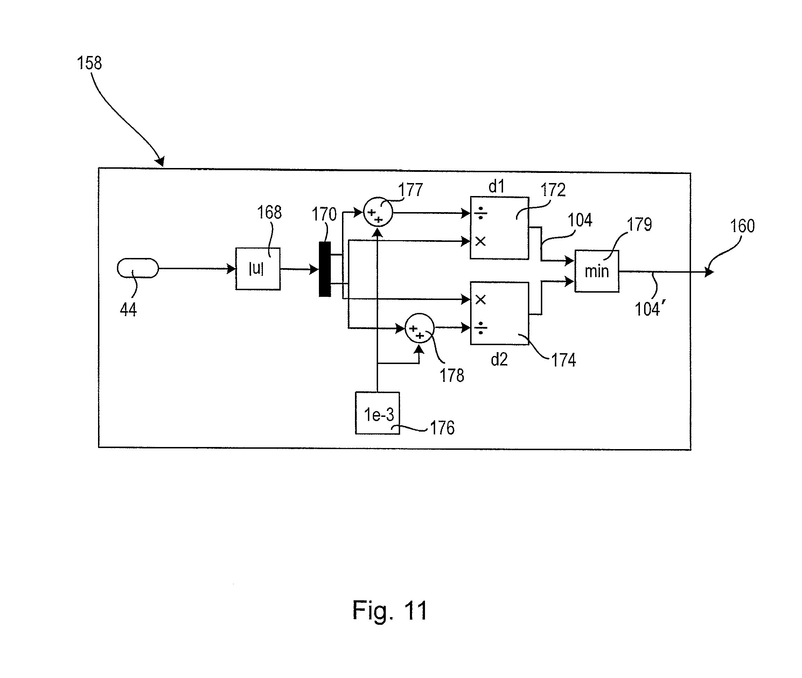

Fig. 11 zeigt die Ausgestaltung des Blocks 158 zur Minimumbildung. In dem Block 158 geht das Eingangssignal 44 in Form von Winkelgeschwindigkeiten um die Hochachse 22 und die Querachse 20 ein, wie sie von den Sensorelementen 46, 46' bestimmt wurden. In einem Block 168 wird zunächst ein Betrag des Eingangssignals 44 gebildet. In einem Block 170 werden die beiden Winkelgeschwindigkeiten, die bisher seriell verarbeitet wurden, aufgetrennt und liegen nunmehr in separater Form vor, grundsätzlich kann auch eine parallele Signalverarbeitung erfolgen, so dass der Block 170 nur der Erläuterung dient. Die Winkelgeschwindigkeit bzw. ersten zeitlichen Ableitungen der Winkelsignale werden dann entsprechend in zwei Blöcke 172, 174 eingegeben, wo sie dividiert werden, um räumliche Ableitungen in beiden Richtungen der Winkeltrajektorie zu bilden, das heißt sowohl eine Ableitung $\frac{dy}{dx}$ bzw. auch eine Ableitung $\frac{dx}{dy}$. Nach den Blöcken 172, 174 liegen entsprechend erste Ortsableitungen vor. Es kann vorgesehen sein, eine Konstante 176, beispielsweise vom Wert 0,001, in Summationsblöcken 177, 178 auf einen jeweiligen Divisor der Blöcke 172, 174 zu addieren, um eine Division durch Null zu vermeiden. In einem Block 179 wird dann das Minimum der Ausgangssignale der Blöcke 172, 174 ermittelt. Bei diesem Minimum handelt es sich aufgrund der Betragsbildung in dem Block 168 um das Betragsminimum der beiden Ortsableitungen bzw. räumlichen Ableitungen $\frac{dy}{dx}$ bzw. $\frac{dx}{dy}$. Das Ausgangssignal des Blocks 179 entspricht dann dem Minimumsignal 160.

Das Minimumsignal 160 ist äquivalent zu dem in Fig. 7 dargestellten Ortsableitungswert bzw. Signal 104 und kann somit auch als Signal 104' bezeichnet werden. Entsprechend kann die in Fig. 7 dargestellte Ermittlung des Signals 104 auch mit der in Fig. 11 dargestellten Ermittlung des Signals 160 ersetzt werden und umgekehrt. Bei einem gewollten Schwenkvorgang ist in der Regel eine der beiden räumlichen Ableitungen klein. Daher ist die in der Fig. 11 dargestellte Ermittlung eines Ortsableitungswerts 160 etwas sicherer und präziser bei der Ermittlung einer Bewegungssituation, die einem gewollten Schwenkvorgang entspricht und folglich bei der Bestimmung des zugeordneten ersten Modus.

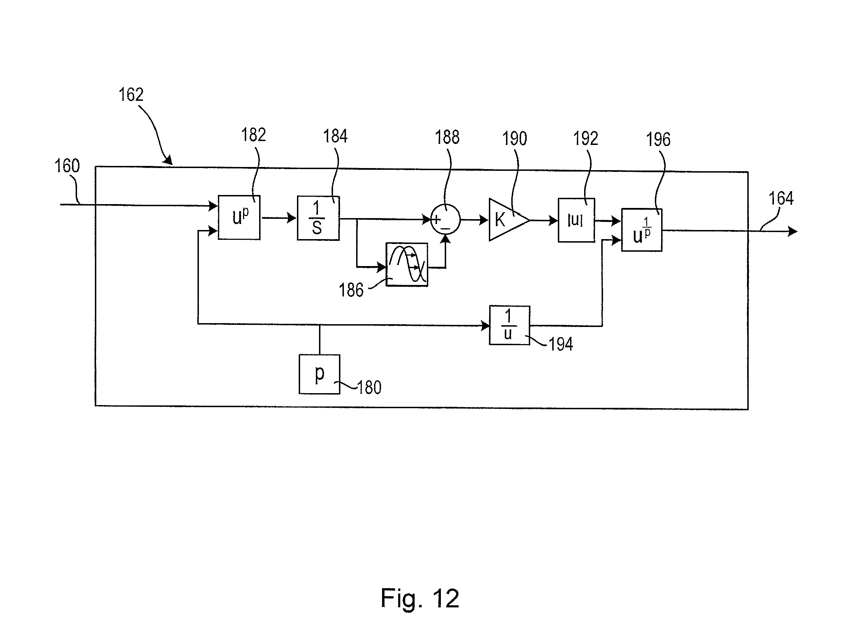

Fig. 12 zeigt einen Block 162 zur Bildung einer Norm. In den Block 162 geht das Minimumsignal 160 ein. Das Ausgangssignal 164 des Blocks 162 ist das Normsignal. In einem Block 180 wird für die p-Norm die Art der Norm festgesetzt. Beispielsweise ergibt sich für einen Wert p = 2 in Block 130 die euklidische Norm. Es kann aber jede beliebige ganze Zahl größer Null eingegeben werden. Bevorzugt kann ein Wert von p = 16 sein. In einem Block 182 geht der Wert p als Exponent ein und das Minimumsignal 160 wird entsprechend exponiert. Anschließend wird es in einem Block 184 integriert. Das integrierte Signal wird in einem Block 186 wiederum einen weiteren bestimmten Zeitraum verzögert und dieser verzögerte Wert in einem Block 188 von dem integrierten Signal des Blocks 184 subtrahiert. Letztendlich wird also das Integral über den weiteren bestimmten Zeitraum ermittelt. In einem Block 190 wird dieses Signal dann durch die Zeitdauer dieses weiteren bestimmten Zeitraums geteilt. In einem Block 192 wird der Betrag dieses Signals gebildet. Der in dem Block 180 festgesetzte Wert p wird in einem Block 194 als Kehrwert gebildet, der dann als Exponent in einen Block 196 eingeht. In dem Block 196 wird das Ausgangssignal des Blocks 192 mit dem in dem Block 194 gebildeten Kehrwert exponiert, so dass sich als Ausgangssignal des Blocks 196 das Normsignal 164 ergibt.

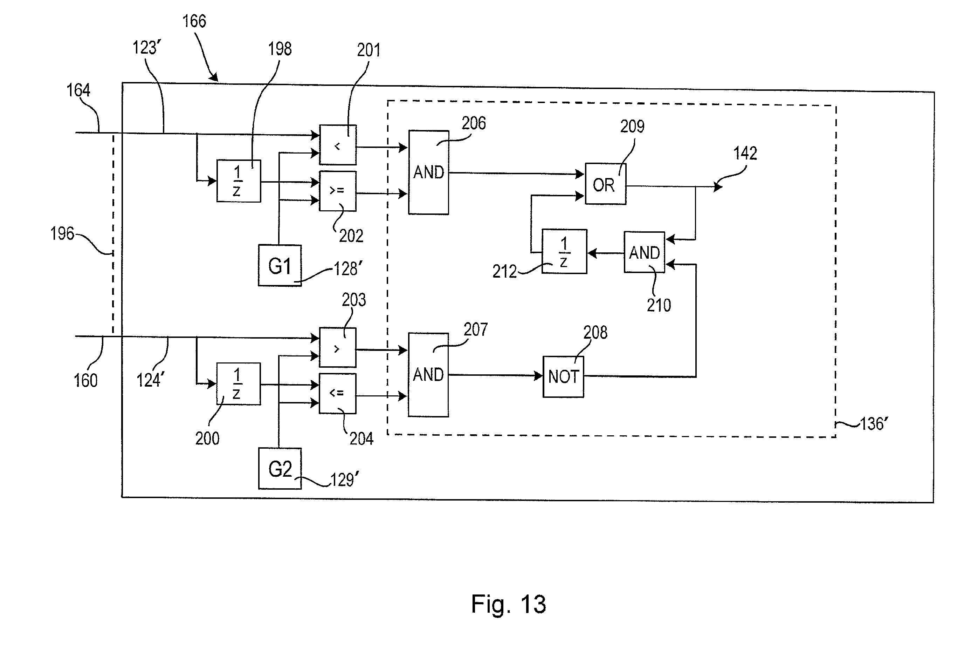

Fig. 13 zeigt den Aufbau des Vergleichsblocks 166. Der Vergleichsblock 166 führt ebenfalls Vergleiche zwischen Vergleichswerten und Grenzwerten durch, wie im Folgenden noch beschrieben wird. Anschließend folgt eine komplexere Verknüpfung logischer Abfragen, die im Kern als Äquivalent zu dem Logikgatter 136 in der Fig. 7 bezeichnet werden kann und mit 136' bezeichnet ist. Auch die in Fig. 13 dargestellte Ausgestaltung des Blocks 166 ist grundsätzlich mit den Vergleichsoperationen 131, 132, 133, 134 und dem Logikgatter 136 in der Fig. 7 äquivalent und kann entsprechend ausgetauscht werden. Beispielsweise kann es genügen, den Block 16 als einfache Vergleichsoperation mit dem Grenzwert 128' auszuführen, woraufhin die ausgegebene wahre oder unwahre Aussage als Resetsignal 142 verwendet wird. Diese in Fig. 13 dargestellte Ausführungsform weist jedoch einen etwas robusteren Aufbau auf und ermöglicht insbesondere ein sehr schnelles Erkennen eines Endes einer Bewegungssituation, die einer gewollten Bewegung bzw. einem Schwenkvorgang entspricht.

Eingegeben werden in den Block 166 das wie voranstehend beschrieben ermittelte Normsignal 164. Des Weiteren wird das Minimumsignal 160 direkt eingegeben. Aus diesem soll insbesondere das Ende eines Schwenkvorgangs erkannt werden, da es nicht wie das Normsignal 164 mit einer gewissen Verzögerung behaftet ist. Dies ist jedoch nicht zwingend notwendig. Wie in einem Signalverlauf 196 angedeutet ist, kann auch das Normsignal 164 sowohl für die Detektion eines Beginns als auch eines Endes einer Bewegungssituation verwendet werden, die einer gewollten Bewegung bzw. einem Schwenkvorgang entspricht. Die Verwendung des Minimumsignals 160 ermöglicht jedoch ein schnelleres Erkennen.

Es sind zwei Grenzwerte 128', 129' festgesetzt, wobei der Wert 128' einen Grenzwert zur Bestimmung eines Beginns der Bewegungssituation bildet, die einem Schwenkvorgang entspricht, und der Grenzwert 129' dazu vorgesehen ist, den Grenzwert zur Bestimmung eines Endes der entsprechenden Bewegungssituation zu bilden.

Für die Grenzwerte 128', 129' gilt Ähnliches wie für die Grenzwerte 128, 129. Grundsätzlich können natürlich auch andere Werte für die Grenzwerte 128', 129' festgesetzt werden. Beispielsweise können die Grenzwerte durch Messungen an dem fernoptischen Gerät 10 vorab kalibriert werden. Auch hier können Messungen durchgeführt werden, während Versuchspersonen das fernoptische Gerät 10 in typischer Weise benutzen. Insbesondere können die Grenzwerte 128', 129' in einem Bereich von 0,6 bis 0,8 liegen, insbesondere also etwa 0,6, 0,65, 0,7, 0,75 oder 0,8 betragen.

Das Normsignal 164 wird also in den Block 166 eingeführt und in einem Block 198 um einen Takt bzw. einen Zeitschritt verzögert. In den Vergleichsoperationen 201 und 202 wird dann abgefragt, ob das Normsignal zum gegenwärtigen Zeitpunkt kleiner als der Grenzwert ist und in dem vorherigen Zeitschritt bzw. dem vorherigen Zeittakt größer oder gleich dem Grenzwert war. Es wird somit genau das Überschreiten des Grenzwerts 128' festgestellt. Auch das Minimumsignal 160 wird in einem Block 200 um einen Takt bzw. einen Zeitschritt verzögert und in den Blöcken 203 und 204 finden entsprechende Vergleichsoperationen bezüglich des zweiten Grenzwerts 129' statt.

Die boolschen Ausgangssignale der Blöcke 201, 202, 203, 204 werden in entsprechende logische Operatoren 206, 207 eingegeben, die dann ein wahres Signal liefern, wenn im Falle des Blocks 206 die Werte der Blöcke 201, 202 und im Falle des Blocks 207 die Werte der Blöcke 203, 204 wahr sind. In dem Block 208 wird das Ausgangssignal des Blocks 207 entsprechend umgekehrt.

In dem Block 209 findet eine Oder-Abfrage statt, das heißt, dieser Block gibt ein wahres Signal aus, wenn eines seiner beiden Eingangssignale wahr ist. Des Weiteren findet eine Verschaltung mittels eines weiteren logischen AND-Blocks 210 und einer Zeitverzögerung 212 um einen Schritt bzw. einen Zeittakt statt. Die dargestellte Verschaltung bewirkt, dass bspw. bei einem Unterschreiten des ersten Grenzwerts 128' der Block 206 ein wahres Signal ausgibt. Entsprechend schaltet auch der Block 209 ein wahres Signal. In diesem Zustand kann der zweite Grenzwert 192 nicht gleichzeitig überschritten werden, so dass im Ausgang des Blocks 208 ebenfalls ein wahres Signal anliegt. Entsprechend schaltet auch der Block 210 ein wahres Signal, das in dem Block 212 in einem Zeitschritt zwischengespeichert wird. In diesem Zustand ist folglich auch das Resetsignal 142 wahr und hat den Wert 1. Das heißt, es ist ein erster Modus geschaltet, dem eine Bewegungssituation einer gewollten Bewegung bzw. eines Schwenkvorgangs zugeordnet ist.

Bleibt der erste Grenzwert 128' nunmehr in dem nächsten Zeitschritt unterschritten, liefert der Block 206 ein unwahres Signal. Da in dem Block 212 jedoch das wahre Signal für einen Zeitschritt gespeichert ist, liegt an dem Block 209 nach wie vor ein wahres Signal an, so dass der Block 209 weiterhin ein wahres Signal ausgibt. Das Resetsignal 142 ist somit nach wie vor wahr, was dem tatsächlich nach wie vor anliegenden ersten Modus entspricht. Der wahre Zustand des Signals 142 wird folglich so lange gehalten, bis das Minimumsignal 160 den zweiten Grenzwert 129' überschreitet. Da das Minimumsignal 160' nicht der Normbildung des Blocks 162 unterworfen ist, kann somit ein Ende eines Verschwenkens bzw. einer dem ersten Modus zugeordneten Bewegungssituation sehr schnell detektiert werden.

Der Block 207 gibt bei einem Ende des Verschwenkens ein wahres Signal aus, das im Block 208 in ein unwahres Signal umgekehrt wird. Folglich gibt auch der Block 210 ein unwahres Signal aus, das in dem Block 212 zwischengespeichert wird. Im nachfolgenden Zeittakt ist dann das Ausgangssignal des Blocks 212 unwahr, genau wie das Ausgangssignal des Blocks 206. Folglich schaltet auch der Block 209 ein unwahres Signal. Das Resetsignal 142 gibt somit ein unwahres Signal aus. Es ist nun ein zweiter Modus geschaltet, dem eine Bewegungssituation zugeordnet ist, die einer ungewollten Bewegung bzw. einer Zitterdrehbewegung entspricht.

Darauffolgend schaltet nun wieder der Block 207 ein unwahres Signal und der Block 208 ein wahres Signal. Da jedoch der Block 209 ein unwahres Signal schaltet, liefert auch der Block 210 ein unwahres Signal, das wieder in den Block 212 für einen Zeitschritt zwischengespeichert wird. Es liegt somit nun so lange für das Resetsignal 142 ein unwahres Signal bzw. eine Null an, bis ein erster Grenzwert 128' erneut unterschritten wird.

Auf diese Weise kann eine sehr robuste logische Schaltung zur Festsetzung des Resetsignals 142 bereitgestellt sein, das den Modus der Ansteuerung der Bildstabilisierungseinrichtung 36, 36' bestimmt. Insbesondere ist es möglich, verschiedene Grenzwerte 128', 129' für ein Hin- und Herschalten zwischen den beiden Modi festzusetzen. Auch ermöglicht die direkte Verwendung des Minimumsignals 160 eine mögliche schnelle Erkennung eines Endes einer gewollten Bewegung bzw. eines Schwenkvorgangs.

**Patentansprüche**

1. Fernoptisches Gerät (10) mit mindestens einem Tubus (11, 12), in dem ein optisches System (14) angeordnet ist, mit mindestens einer Bildstabilisierungseinrichtung (33, 36, 39), die dazu ausgebildet ist, mindestens eine optische Baugruppe (16, 17, 18) des optischen Systems (14) relativ zu dem mindestens einen Tubus (11, 12) zu bewegen, mit mindestens einer Signalverarbeitungseinheit (42), die derart ausgebildet ist, dass sie die mindestens eine Bildstabilisierungseinrichtung (33, 36, 39) in einem Modus aus einer Mehrzahl von Modi (84, 86) ansteuert, wobei jedem Modus eine jeweilige Bewegungssituation des fernoptischen Geräts (10) zugeordnet ist, und mit einer Modusdetektionseinheit (54), die derart ausgebildet ist, dass die den Modus aus der Mehrzahl von Modi (84, 86) bestimmt, **dadurch gekennzeichnet, dass**

   die Modusdetektionseinheit (54) des Weiteren derart ausgebildet ist, dass sie den Modus bestimmt, indem sie mindestens einen Vergleichswert (123, 124, 125, 126) aus einem jeweiligen Ortsableitungswert (104, 108) einer aus einer ersten Bewegung (26) und einer zweiten Bewegung (28) des fernoptischen Geräts (10) gebildeten Trajektorie ermittelt und den mindestens einen Vergleichswert (123, 124, 125, 126) mit einem jeweiligen Grenzwert (128, 129) vergleicht.

**2.** Fernoptisches Gerät nach Anspruch 1, **dadurch gekennzeichnet, dass** der Vergleichswert (123, 124, 125, 126) eine Bogenlänge des Ortsableitungswerts (104, 108) über einen ersten Zeitraum ist.

**3.** Fernoptisches Gerät nach Anspruch 1, **dadurch gekennzeichnet, dass** der Vergleichswert (123, 124, 125, 126) eine Norm des jeweiligen Ortsableitungswerts (104, 108) zu einem diskreten Zeitpunkt ist, oder dass der Vergleichswert (123, 124, 125, 126) ein Integral einer Norm des jeweiligen Ortsableitungswerts (104, 108) über einen zweiten Zeitraum ist.

**4.** Fernoptisches Gerät nach einem der Ansprüche 1 bis 3, **dadurch gekennzeichnet, dass** der jeweilige Ortsableitungswert (104, 108) eine Ortsableitung der Trajektorie zu einem diskreten Zeitpunkt ist, oder dass der jeweilige Ortsableitungswert (104, 108) ein Integral einer Ortsableitung der Trajektorie über einen dritten Zeitraum ist.

**5.** Fernoptisches Gerät nach Anspruch 3 oder 4, **dadurch gekennzeichnet, dass** die Norm der Absolutbetrag ist, oder dass die Norm eine p-Norm ist, insbesondere die euklidische Norm.

**6.** Fernoptisches Gerät nach Anspruch 4, **dadurch gekennzeichnet, dass** die Ortsableitung eine erste Ableitung der Trajektorie nach der ersten Bewegung (26) oder nach der zweiten Bewegung (28) ist, und/ oder dass die Ortsableitung eine zweite Ableitung der Trajektorie nach der ersten Bewegung (26) oder der zweiten Bewegung (28) ist.

**7.** Fernoptisches Gerät nach Anspruch 6, **dadurch gekennzeichnet, dass** die Ortsableitung die betragskleinere von den ersten Ableitungen der Trajektorie nach der ersten Bewegung (26) und der zweiten Bewegung (28) ist, und/oder dass die Ortsableitung die betragskleinere von den zweiten Ableitungen der Trajektorie nach der ersten Bewegung (26) und der zweiten Bewegung (28) ist.

**8.** Fernoptisches Gerät nach einem der Ansprüche 1 bis 7, **dadurch gekennzeichnet, dass** die erste Bewegung (26) eine Drehbewegung ist und die zweite Bewegung (28) eine Drehbewegung ist und die Trajektorie eine Winkeltrajektorie ist.

**9.** Fernoptisches Gerät nach einem der Ansprüche 1 bis 8, **dadurch gekennzeichnet, dass** die Modusdetektionseinheit (54) derart ausgebildet ist, dass sie mehr als einen Vergleichswert (123, 124, 125, 126) ermittelt und Ergebnisse eines jeweiligen Vergleichs jedes Vergleichswerts (123, 124, 125, 126) mit einem jeweiligen Grenzwert (128, 129) durch ein Logikgatter (136) verknüpft sind.

**10.** Fernoptisches Gerät nach Anspruch 9, **dadurch gekennzeichnet, dass** die Modusdetektionseinheit (54) derart ausgebildet ist, dass ein erster Vergleichswert (125, 126) der mehreren Vergleichswerte (123, 124, 125, 126) einem zweiten Vergleichswert (124) der mehreren Vergleichswerte (123, 124, 125, 126) zu einem früheren Zeitpunkt entspricht.

**11.** Fernoptisches Gerät nach einem der Ansprüche 1 bis 10, **dadurch gekennzeichnet, dass** das fernoptische Gerät (10) des Weiteren derart ausgebildet ist, dass einem ersten Modus eine Bewegungssituation zugeordnet ist, die einem Schwenkvorgang entspricht, und ein Winkelsignal (81) zur Ansteuerung der mindestens einen Bildstabilisierungseinrichtung (33, 36, 39) in dem ersten Modus auf Null gesetzt ist.

**12.** Fernoptisches Gerät nach einem der Ansprüche 1 bis 11, **dadurch gekennzeichnet, dass** das fernoptische Gerät (10) des Weiteren derart ausgebildet ist, dass einem ersten Modus eine Bewegungssituation zugeordnet ist, die einem Schwenkvorgang entspricht, und ein Winkelsignal (81) zur Ansteuerung der mindestens einen Bildstabilisierungseinrichtung (33, 36, 39) von einer Integratoreinheit (60) erzeugt ist, und ein durch den Schwenkvorgang hervorgerufener Amplitudenversatz des Winkelsignals (81) eliminiert wird, indem die Integratoreinheit (60) bei einem Verlassen des ersten Modus auf Null zurückgesetzt ist.

**13.** Fernoptisches Gerät nach einem der Ansprüche 1 bis 11 oder nach dem Oberbegriff des Anspruchs 1, **dadurch gekennzeichnet, dass** das fernoptische Gerät (10) des Weiteren derart ausgebildet ist, dass ein Positionssignal (81), insbesondere ein Winkelsignal, zur Ansteuerung der mindestens einen Bildstabilisierungseinrichtung (33, 36, 39) von einer Integratoreinheit (60) der Signalverarbeitungseinheit (42) erzeugt ist, und eine Eliminierung eines durch einen Bewegungsvorgang, insbesondere einen Schwenkvorgang, hervorgerufenen Amplitudenversatzes des Positionssignals (81) und eine Begrenzung des Positionssignals (81) auf eine Maximalamplitude (83) erfolgt, indem die Signalverarbeitungseinheit (42) einen Subtraktionswert (93) ermittelt, indem sie das Positionssignal (81) durch die doppelte Maximalamplitude (83) teilt und dann auf eine nächstliegende ganze Zahl (91) rundet, und die nächstliegende ganze Zahl (91) dann mit der doppelten Maximalamplitude (83) multipliziert, und dann den Subtraktionswert (93) von dem Positionssignal (81) subtrahiert.

**14.** Fernoptisches Gerät nach Anspruch 13, **dadurch gekennzeichnet, dass** die Signalverarbeitungseinheit (42) das Positionssignal (81) vor der Eliminierung des Amplitudenversatzes und der Begrenzung auf die Maximalamplitude (83) durch einen Skalierungsfaktor (95) teilt und nach der Eliminierung des Amplitudenversatzes und der Begrenzung auf die Maximalamplitude (83) mit dem Skalierungsfaktor (95) multipliziert.

15. Fernoptisches Gerät nach einem der Ansprüche 1 bis 12, **dadurch gekennzeichnet, dass** das fernoptische Gerät (10) des Weiteren derart ausgebildet ist, dass ein Positionssignal (81), insbesondere ein Winkelsignal, zur Ansteuerung der mindestens einen Bildstabilisierungseinrichtung (33, 36, 39) von einer Integratoreinheit (60) der Signalverarbeitungseinheit (42) erzeugt ist, und eine Eliminierung eines durch einen Bewegungsvorgang, insbesondere einen Schwenkvorgang, hervorgerufenen Amplitudenversatzes des Positionssignals (81) erfolgt, indem die Signalverarbeitungseinheit (42) von dem Positionssignal (81) einen über einen vierten Zeitraum ermittelten Mittelwert (144) des Positionssignals (81) subtrahiert.

16. Verfahren (54, 54') zum Bestimmen eines Modus für eine Ansteuerung einer Bildstabilisierungseinrichtung (33, 36, 39) in einem fernoptisches Gerät (10), wobei die Bildstabilisierungseinrichtung (33, 36, 39) in einem Modus aus einer Mehrzahl von Modi (84, 86) angesteuert wird, wobei jedem Modus eine jeweilige Bewegungssituation des fernoptischen Geräts (10) zugeordnet ist, **dadurch gekennzeichnet, dass**
der Modus bestimmt wird, indem mindestens ein Vergleichswert (123, 124, 125, 126) aus einem Ortsableitungswert (104, 108) einer aus einer ersten Bewegung (26) und einer zweiten Bewegung (28) des fernoptischen Geräts (10) gebildeten Trajektorie ermittelt wird und der mindestens eine Vergleichswert (123, 124, 125, 126) mit einem jeweiligen Grenzwert (128, 129) verglichen wird.

17. Verfahren nach Anspruch 16 oder dem Oberbegriff des Anspruchs 16, **dadurch gekennzeichnet, dass** das ein Positionssignal (81), insbesondere ein Winkelsignal, zur Ansteuerung der mindestens einen Bildstabilisierungseinrichtung (33, 36, 39) von einer Integratoreinheit (60) der Signalverarbeitungseinheit (42) erzeugt wird, und ein durch einen Bewegungsvorgang, insbesondere einen Schwenkvorgang, hervorgerufener Amplitudenversatz des Positionssignals (81) eliminiert und das Positionssignal (81) auf eine Maximalamplitude (83) begrenzt wird, indem ein Subtraktionswert (93) ermittelt wird, indem das Positionssignal (81) durch die doppelte Maximalamplitude (83) geteilt und dann auf eine nächstliegende ganze Zahl (91) gerundet wird, und die nächstliegende ganze Zahl (91) dann mit der doppelten Maximalamplitude (83) multipliziert wird, und dann der Subtraktionswert (93) von dem Positionssignal (81) subtrahiert wird.

18. Computerprogramm mit Programmcodemitteln, das dazu ausgebildet ist, alle Schritte eines Verfahrens (54, 54') nach Anspruch 16 oder 17 auszuführen, wenn das Computerprogramm auf einem Computer oder einer entsprechenden Datenverarbeitungseinheit, insbesondere der Signalverarbeitungseinheit (42) des fernoptischen Geräts (10), ausgeführt wird.

19. Computerprogrammprodukt mit Programmcodemitteln, die auf einem computerlesbaren Datenträger gespeichert sind, um ein Verfahren (54, 54') nach Anspruch 16 oder 17 durchzuführen, wenn das Computerprogramm auf einem Computer oder einer entsprechenden Datenverarbeitungseinheit, insbesondere der Signalverarbeitungseinheit (42) des fernoptischen Geräts (10), ausgeführt wird.

Fig. 1

Fig. 2

Fig. 3

Fig. 4a

Fig. 4b

Fig. 5

EP 2 615 487 A2

Fig. 6

Fig. 7

Fig. 8

Fig. 9

54′

44 → 158 →(160) 162 →(164) 166 → 142

Fig. 10

EP 2 615 487 A2

Fig. 11

Fig. 12

Fig. 13

EP 2 615 487 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19937775 A1
- US 6384976 B1
- EP 1980904 A2
- EP 1708019 A1
- EP 0587432 B1
- US 5444509 A